# EUROPEAN PATENT APPLICATION

(11) **EP 4 481 601 A1**
(43) Date of publication of application: **25.12.2024**
(21) Application number: 24182946.4
(22) Date of filing: 18.06.2024
(51) Int. Cl.: G06F 21/55, G06F 11/30, G06F 11/34, G06F 21/56, H04L 41/06, H04L 41/0604, H04L 41/0631, H04L 9/40

(54) **RULES-BASED MALWARE RESOLUTION SUGGESTIONS**

(30) Priority: 20.06.2023 US 202318338112
(71) Applicant: CrowdStrike, Inc., Sunnyvale, CA 94086 (US)
(72) Inventor: Sumpter, Alastair, Sunnyvale (US)
(74) Representative: Murgitroyd & Company

(57) **Abstract**

A rules-based malware detection and assessment service pre-screens malware events reported by endpoint client devices. The endpoint client devices report the malware events to a cloud-computing environment providing the malware detection and assessment service. The malware events are compared to logical rules specifying malware and safe activities. Moreover, the malware detection and assessment service maintains a comprehensive, historical database that stores logs and tracks each malware event. Any new malware events are compared to the historical database. Any matching historical entry indicates a duplicate or repetitive malware detection, so the historical detection and assessment may be retrieved and suggested. The rules-based malware detection and assessment service thus provides a much faster and simpler resolution that easily scales to the ever-increasing volume of malware reports.

## Description

### BACKGROUND

The subject matter described herein generally relates to computers and to computer security and, more particularly, the subject matter relates to cyber security detection of malicious software.

Cyber security threats are always increasing. Every week, a cyber security service provider may receive thousands of reports of viruses, hacks, and other malicious software (or malware). Each malware event describes some suspicious behavior, identity, location, or other data that may indicate malware infecting a device. These malware events are manually inspected and assessed by human expert analysts. The human expert analysts scrutinize the malware events to confirm whether the events are truly malware (true positive reports) or harmless activity (false positive reports). Needless to say, human inspection and assessment requires great skill and much time. As the volume of malware reports is always increasing, the human expert analysts struggle to manage the volume.

### SUMMARY

A cloud-based malware assessment service detects and pre-screens the malware reports. The cloud-based malware assessment service monitors the malware events reported to a cloud-computing environment. Many people and companies download a malware sensory agent to their smartphones, computers, servers, and other endpoint devices. The malware sensory agent monitors the endpoint device for viruses, hacks, and other malicious software (or malware). Should the malware sensory agent detect suspicious behavior, identity, location, or other data, the malware sensory agent reports a malware event to the cloud-computing environment. The malware assessment service compares the malware event to logical rules. The rules specify patterns, behaviors, content, characteristics, or other evidence of malware. The rules may also specify safe or harmless patterns, behaviors, content, characteristics, or other data. So, when the malware event is compared to the rules, the cloud-based malware assessment service quickly determines whether the malware event is truly malware (a true positive report) or is harmless activity (a false positive report). The logical rules thus enable an elegantly simple and fast pre-screening of the malware events. Moreover, the cloud-based malware assessment service comprehensively logs and tracks each malware event. Because thousands of malware events are received each week, the cloud-based malware assessment service quickly builds a richly-detailed repository or database of institutional malware knowledge. Any new malware events may be quickly and easily compared to the repository to identify historical entries. If any new malware event matches a historical entry, then a similar malware event has already been observed and logged. The new malware event, in other words, has already been assessed and resolved. The cloud-based malware assessment service need only retrieve the historical assessment and generate a suggestion that details the historical assessment. Because the cloud-based malware assessment service may suggest the historical assessment that was previously applied by an expert analyst, there may be no need to "re-invent the wheel" and laboriously scrutinize the new malware event. Indeed, the cloud-based malware assessment service may even auto-implement the historical assessment, if configured to permit auto-resolution. The cloud-based malware assessment service thus provides much faster malware detection and assessment that easily manages the ever-increasing reports of malware from client devices.
Accordingly there is provided a method as detailed in claim 1. Advantageous features are provided in the dependent claims. In addition a computer configured to perform the method is also provided. A computer program as detailed in the claims is also provided.

### BRIEF DESCRIPTION OF THE SEVERAL VIEWS OF THE DRAWINGS

The features, aspects, and advantages of cloud services malware detection are understood when the following Detailed Description is read with reference to the accompanying drawings, wherein:
FIGs. 1-2 illustrate some examples of triaging malware detections reported by clients;
FIG. 3 illustrates some examples of normal determinations;
FIGs. 4-6 illustrate examples of a malware resolution suggestion;
FIG. 7 illustrates examples using machine learning;
FIGs. 8-9 illustrate detailed examples of malware events;
FIG. 10 illustrates examples of remote malware assessments;
FIGs. 11-13 illustrate examples of webpages and graphical user interfaces;
FIG. 14 illustrates examples of auto-generation of malware assessment rules;
FIG. 15 illustrates examples of containerized malware assessment services;
FIGs. 16-17 illustrate more detailed examples of the malware assessment service;
FIGs. 18-19 illustrate examples of the malware assessment rules;
FIGs. 20-21 illustrate yet more examples of the malware assessment rules;
FIGs. 22-24 illustrate more examples of the malware resolution suggestions
FIG. 25 illustrates examples of a method or operations that assess and resolve the malware event;
FIG. 26 illustrates more examples of a method or operations that assess and resolve the malware event;
FIG. 27 illustrates still more examples of a method or operations that assess and resolve the malware event; and
FIG. 28 illustrates a more detailed example of the operating environment.

### DETAILED DESCRIPTION

A cloud-based malware assessment service pre-screens malware detections. The malware assessment service monitors malware events reported to a cloud-computing environment. The malware events are reported by a malware sensory agent downloaded to smartphones, computers, servers, and other endpoint devices. The malware sensory agent monitors the endpoint device for viruses, hacks, and other malicious software (or malware). Should the malware sensory agent detect suspicious behavior, identity, location, or other data, the malware sensory agent sends a malware event to the cloud-computing environment. When the cloud-based malware assessment service receives the malware event, the cloud-based malware assessment service compares the malware event to logical rules. The rules specify patterns, behaviors, content, characteristics, or other evidence of malware. The rules may also specify safe or harmless patterns, behaviors, content, characteristics, or other data. So, when the malware event is compared to the rules, the cloud-based malware assessment service quickly and simply determines whether the malware event is truly malware (true positive report) or is harmless activity (false positive report). The logical rules thus enable an elegantly simple and fast pre-screening of the malware events. The cloud-based malware assessment service provides a much faster malware assessment that easily manages the ever-increasing reports of malware from client devices.

The cloud-based malware assessment service also maintains historical records. The cloud-based malware assessment service maintains a central repository or database that comprehensively logs and tracks each malware event. The cloud-based malware assessment service thus stores full, detailed records of each malware event, the rule(s) satisfied by the malware event, and any formal or final malware determination assessed by the human expert analysts. Because the cloud-based malware assessment service receives thousands of malware events each week, the cloud-based malware assessment service quickly builds a richly-detailed repository of expert, institutional malware knowledge. The cloud-based malware assessment service may tap this historical malware knowledge for even faster pre-screening of the malware events. Moreover, this historical malware knowledge may be translated into additional logical rules for assessing new or morphing malware attacks.

The cloud-based malware assessment service also generates suggestions. Because each malware event is comprehensively logged, this wealth of historical malware knowledge may be tapped to quickly resolve new malware events. As the thousands of malware events are received, the malware events may be quickly and easily compared to the central repository or database that comprehensively logs and tracks all the malware events. If any new malware event matches a historical entry in the central repository or database, then the cloud-based malware assessment service has already observed and logged a similar malware event. The new malware event, in other words, has already been assessed and resolved. The cloud-based malware assessment service need only retrieve the historical assessment and generate a suggestion that details the historical assessment. Because the cloud-based malware assessment service may suggest the historical assessment that was previously applied by an expert analyst, there may be no need to "re-invent the wheel" and laboriously scrutinize the new malware event. Indeed, the cloud-based malware assessment service may even auto-implement the historical assessment, if configured to permit auto-resolution.

The cloud-based malware assessment service will now be described more fully hereinafter with reference to the accompanying drawings. Cloud-based malware detection and assessment, however, may be embodied in many different forms and should not be construed as limited to the examples set forth herein. These examples are provided so that this disclosure will be thorough and complete and fully convey cloud-based malware detection and assessment to those of ordinary skill in the art. Moreover, all the examples of cloud-based malware detection and assessment are intended to encompass both structural and functional equivalents thereof. Additionally, it is intended that such equivalents include both currently known equivalents as well as equivalents developed in the future (*i.e.*, any elements developed that perform the same function, regardless of structure).

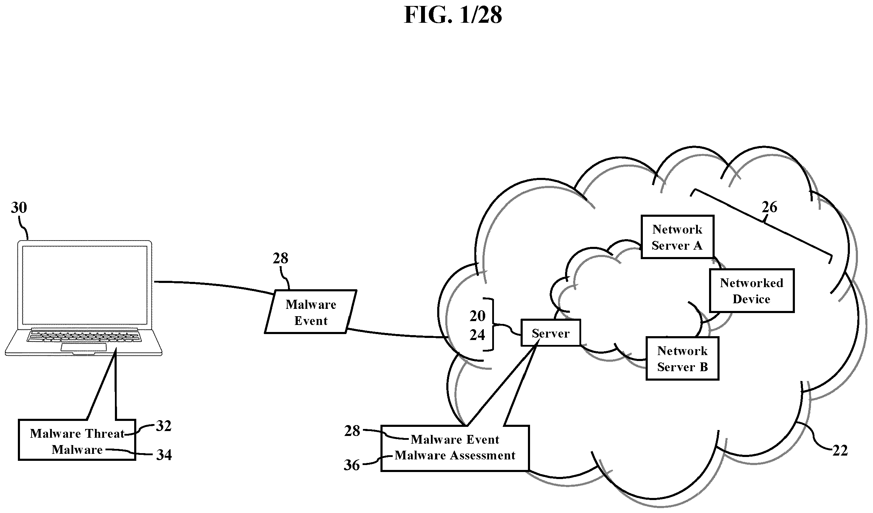

FIGs. 1-2 illustrate some examples of triaging malware detections reported by clients. A computer 20 operates in a cloud-computing environment 22. FIG. 1 illustrates the computer 20 as a server 24. The computer 20, though, may be any processor-controlled device, as later paragraphs will explain. In this example, the server 24 communicates via the cloud-computing environment 22 (*e.g.*, public Internet, private network, and/or hybrid network) with other servers, devices, computers, or other networked members 26 operating within, or affiliated with, the cloud-computing environment 26. The server 24 is programmed to pre-screen or assess malware events 28 reported by a client device 30. That is, when the client device 30 detects suspicious behavior, unusual login/location context, or other potential malware threat 32 (as later paragraphs will explain in greater detail), the client device 30 sends the malware event 28 to the cloud-computing environment 22. The malware event 28 alerts or notifies the cloud-computing environment 22 that the client device 30 has detected the potential malware threat 32. The client device 30, in other words, has detected a program, process, communication, behavior, location, or some other evidence that may indicate the presence of malicious software (or malware) 34. The client device 30 may then notify the cloud-computing environment 22 for a fuller, more detailed malware assessment 36.

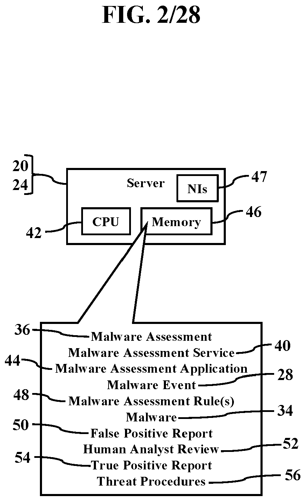

FIG. 2 illustrates some examples of the malware assessment 36. When the cloud-computing environment 22 (illustrated in FIG. 1) receives the malware event 28, the cloud-computing environment 22 may route the malware event 28 to the server 24 for the malware assessment 36. The server 24 may thus provide a cloud-based malware assessment service 40 to the networked members 26 operating within, or affiliated with, the cloud-computing environment 26 (illustrated in FIG. 1). The server 24 may also provide the malware assessment service 40 to other clients (such as the client device 30 illustrated in FIG. 1). The server 24 has a hardware processor 42 (illustrated as "CPU") that executes a malware assessment application 44 stored in a memory device 46. The server 24 also has network interfaces (illustrated as "NIs") 47 to multiple communications networks (such as the cloud-computing environment 26 illustrated in FIG. 1), thus allowing bi-directional communications with networked devices. When the server 24 receives the malware event 28, the malware assessment application 44 may be a computer program, instruction(s), or code that instructs or causes the server 24 to preliminarily assess the malware event 28.

The server 24 performs a quick, simple, and effective malware assessment service 40. When the server 24 receives the malware event 28, the server 24 executes the malware assessment application 44 as a malware engine. The server 24 ingests the malware event 28 as an input, and the malware assessment application 44 instructs the server 24 to compare the malware event 28 to malware assessment rules 48. Each malware assessment rule 48 logically defines or specifies events, communications, activities, behaviors, data values, patterns, contextual login/location, or other electronic content that is/are known evidence of the malware 34. The malware assessment rules 48 may thus represent historical confirmations or observations of information, data, bits/bytes, and/or other electronic content that is/are known to indicate the presence of the malware 34. Whatever information or data is described by, or included with, the malware event 28, that information or data is compared to the malware assessment rules 48. If the electronic content represented by the malware event 28 fails to equal, match, or satisfy any one or more of the malware assessment rules 48, then the malware assessment application 44 may determine that the malware event 28 is a false positive report 50. The malware event 28, in other words, may not contain or exhibit evidence or characteristics of known malware 34 (as defined or specified by the malware assessment rules 48). Even though the client device 30 detected and reported the malware event 28, the malware event 28 lacks electronic content confirmed as the malware 34, as defined or specified by the malware assessment rules 48. Because the malware event 28 does not match any one or more of the malware assessment rules 48, the malware assessment application 44 may instruct the server 24 to label, sort, or classify the malware event 28 as benign, low priority, and/or not requiring further malware investigation (*e.g*., the false positive report 50). Even if the malware assessment application 44 queues the malware event 28 for a human analyst review 52, that human analyst review 52 may be classified or queued as low priority. Urgent malware resources may thus be allocated to other, higher-priority malware detections.

The malware event 28, however, may be suspicious. If the electronic content representing the malware event 28 equals, matches, or otherwise satisfies any one or more of the malware assessment rules 48, then the malware assessment application 44 may determine that the malware event 28 contains or exhibits known evidence of the malware 34. The malware event 28 thus describes an abnormal or unexpected event, communication, activity, process, data value, pattern, and/or contextual login/location that has been specified by the malware assessment rules 48 as confirmed evidence of the malware 34. Because the malware event 28 has characteristics or content ruled as the potential malware 34, the malware assessment application 44 may instruct the server 24 to escalate the malware event 28 for further malware investigation. The malware assessment application 44, for example, may initially or preliminarily classify the malware event 28 as a true positive report 54. The malware assessment application 44 may instruct the client device 30 to implement notification/quarantine/isolation/halt or other urgent threat procedures 56. The malware assessment application 44 may also hand-off and queue the malware event 28 for the human analyst review 52. Because the malware event 28 has been screened and preliminarily assessed as the true positive report 54 of the malware 34, the malware assessment application 44 may route the malware event 28 to a human expert or group of human experts for an urgent, deep-dive analysis.

Computer functioning is greatly improved. Malicious software can ruin computer operations. The server 24 must quickly identify malicious software to minimize damage to the client computers 30. Because the malware assessment application 44 utilizes the malware assessment rules 48, the rules-based malware assessment service 40 is very fast and very simple to execute. The server 24 need merely compare the malware event 28 to the malware assessment rules 48. Because the malware assessment rules 48 are simple logical statements, the malware assessment rules 48 consume little space (in bits/bytes) in the memory device 46. Moreover, because the malware assessment rules 48 are simple logical statements, the hardware processor 42 requires less cycles to identify the malware 34. Computer resources are reduced, and less electrical power is required to test for presence of the malware 34. The rules-based malware assessment service 40 is thus very fast and very simple, allowing the server 24 to quickly assess the thousands of malware events 28 reported each week. The rules-based malware assessment service 40 thus greatly improves computer functioning of the server 24 when detecting the malware 34.

Computer functioning is further improved. Because the rules-based malware assessment service 40 is very fast and very simple, the malware assessment service 40 is superior to machine learning. Sophisticated machine learning techniques are often used to identify malware. These machine learning techniques, though, require much memory, powerful hardware processors, and much electrical power. Moreover, machine learning techniques must be trained using massive datasets collected over time. A new malware pattern, for example, may require perhaps hours or even days of modeling and training for machine learning. In malware detection, though, time is often an enemy. Threat actors exploit every opportunity however short, so the malware 34 must be urgently and immediately detected to minimize damage. Because machine learning techniques may require hours or even days of modeling and training, machine learning is too slow to quickly respond to new malware threats. The malware assessment service 40, in contradistinction, needs only seconds to ingest new or updated malware assessment rules 48 that reflect new malware patterns. The malware assessment rules 48 may be generically or broadly defined to capture/detect future unknowns. The malware assessment rules 48 may also be flexibly defined to extract any desired data point for pattern matching. Simply put, the feedback loop is so small that unseen behaviors and novel patterns may have rules created and in use in minutes. The server 24 may thus very quickly adapt and identify new or evolving malware threats.

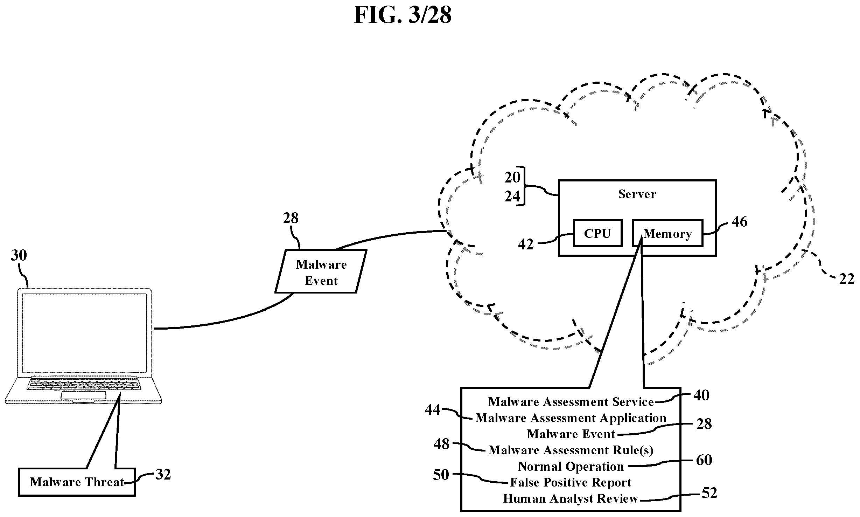

FIG. 3 illustrates some examples of normal determinations. The malware assessment rules 48 may also specify safe or harmless behaviors and activities. That is, some of the malware assessment rules 48 may logically specify events, communications, activities, behaviors, data values, patterns, contextual login/location, or other electronic content that is/are known evidence of normal or expected operation 60. The malware assessment rules 48 may thus represent historical confirmations or observations of information, data, bits/bytes, and/or other electronic content that is/are known to lack deviation from usual, predicted, or typical behaviors, activities, logins, and locations. So, even though the client device 30 detected and reported the malware event 28, the characteristics or content referenced by the malware event 28 may equal, match, or satisfy a malware assessment rule 48 specifying the normal operation 60. The malware assessment application 44 may thus determine that the malware event 28 is a likely false alarm (*e.g*., the false positive report 50), based on the malware assessment rule(s) 48 specifying the normal operation 60. The malware assessment application 44 may instruct the server 24 to label, sort, or classify the malware event 28 as benign, low priority, and/or not requiring further malware investigation (*e.g*., the false positive report 50). Even if the malware assessment application 44 queues the malware event 28 for the human analyst review 52, the malware assessment application 44 may classify or queue that human analyst review 52 as low priority. Again, the malware assessment application 44 may allocate urgent malware resources to other, higher-priority malware detections.

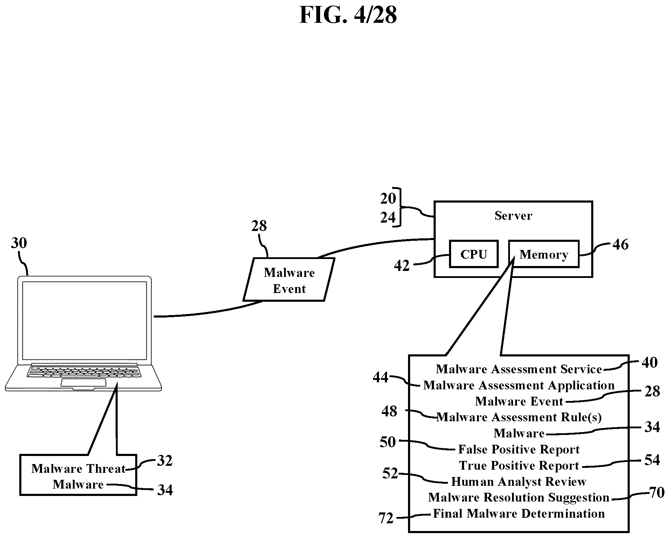

FIGs. 4-6 illustrate examples of a malware resolution suggestion 70. When the malware event 28 equals, matches, or otherwise satisfies any of the malware assessment rules 48, the malware event 28 exhibits some characteristic or content that has been machine-assessed as either a false alarm (*e.g*., the false positive report 50) or as the true positive report 54 of the malware 34. To be especially safe and certain, though, the malware assessment application 44 may be additionally configured to hand-off and to queue the malware event 28 for the human analyst review 52. The malware assessment application 44, in other words, may assign the malware event 28 to subject matter experts (such as an expert human analyst or team) for a second/subsequent final malware determination 72. Still, even though the malware assessment application 44 may queue the malware event 28 for the human analyst review 52, the malware assessment application 44 may also generate the malware resolution suggestion 70. The malware resolution suggestion 70 provides guidance on resolving whether the malware event 28 is a false alarm (*e.g*., the false positive report 50) or the true positive report 54 of the malware 34. Should the malware assessment application 44 assign the malware event 38 for the human analyst review 52, the malware assessment application 44 may also generate and send the malware resolution suggestion 70. The malware resolution suggestion 70 provides guidance to the human expert analyst for the final malware determination 72.

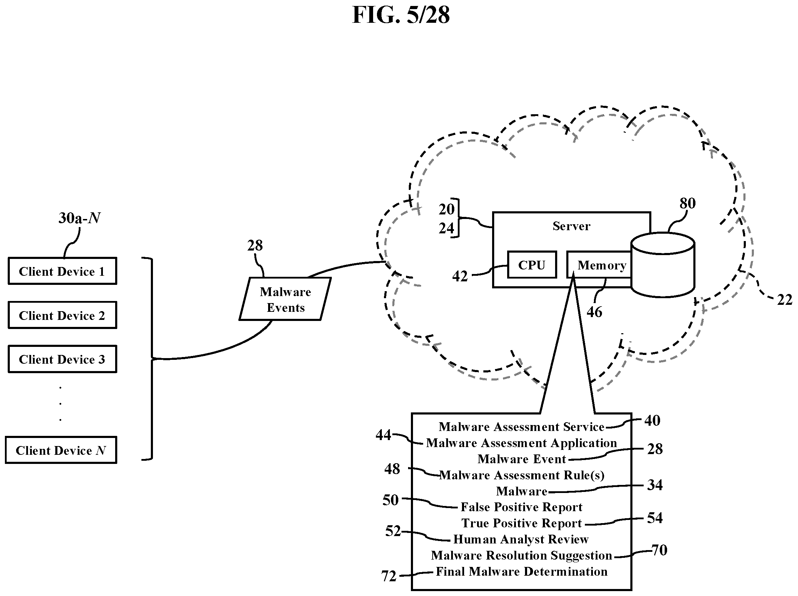

FIG. 5 illustrates examples of historical expertise. The malware resolution suggestion 70 may represent institutional knowledge developed over months/years by the subject matter experts. The subject matter experts (conducting the human analyst reviews 52) analyze thousands or even millions of the malware events 28 reported by the client devices 30. While this disclosure only illustrates a few client devices 30, in actual practice there may be millions of client devices 30 reporting thousands of malware events 28 each week. As the subject matter experts scrutinize these thousands of weekly malware events 28, much historical expertise is generated. This historical expertise is be captured, harvested, and shared to more quickly and effectively resolve the many malware events 28 reported by the many client devices 30. So, as the subject matter expert conducts the human analyst review 52, the malware assessment application 44 generates and displays the malware resolution suggestion 70. The malware assessment application 44 thus provides a contemporaneous, real-time contextual, targeted suggestion during the human analyst review 52. The malware resolution suggestion 70 is presented to the expert analysts at the time when needed and provides relevant, actionable information. Because the malware resolution suggestion 70 may be based on historical malware observations, the malware resolution suggestion 70 reduces the time to triage and to resolve malware detections.

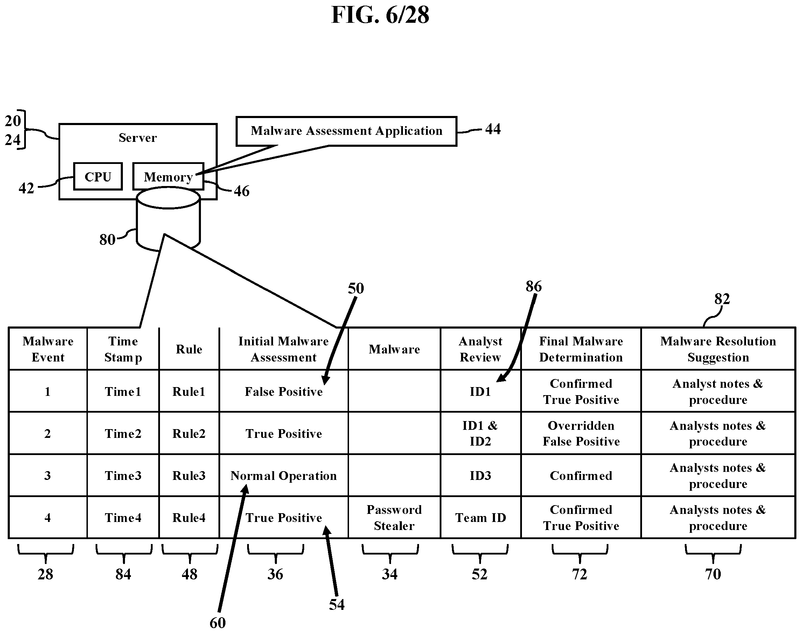

FIGs. 5-6 thus illustrate an electronic database 80 of malware events. While any architecture or component may represent the historical expertise, the electronic database 80 of malware events provides examples of a rich repository of historical malware knowledge. As the cloud-computing environment 22 receives and assesses the many malware events 28, the cloud-computing environment 22 may collect and store the malware events 28 to the electronic database 80. While the electronic database 80 of malware events may be remotely stored and accessed/queried from any networked location, for simplicity FIG. 5 illustrates the electronic database 80 as being locally stored in the memory device 46 of the server 24. Even though the electronic database 80 may have any logical structure, a relational database is perhaps easiest to understand. FIG. 6 thus illustrates the electronic database 80 as a table 82 having row and columnar database entries that map, relate, convert, or associate different malware events 28 to their corresponding triggering malware resolution rule(s) 48. As the many malware events 28 are routed to the server 24, the malware assessment application 44 may add database entries that log each malware event 28, its corresponding date/time stamp 84, and its corresponding malware resolution rule(s) 48. The electronic database 80 of malware events may further track the initial, rule-based malware assessment 36 (such as the false positive report 50 or the true positive report 54). The electronic database 80 may further store and identify the malware 34 that corresponds with the malware resolution rule(s) 48. Moreover, if the malware event 28 was scrutinized during the human analyst review 52, the electronic database 80 of malware events may further log and identify the names/identifiers of the human expert analyst(s) 86 and his/her/their final malware determination 72. The final malware determination 72 may thus include any notes or analysis used/applied by the human expert analyst(s) 86 to confirm, or to override, the initial, rule-based malware assessment 36. So, when the malware assessment application 44 receives and evaluates any new or current malware event 28, the malware assessment application 44 may query the electronic database 80 of malware events for any historically-assessed malware event 28 that was previously logged. If a matching database entry is determined, then the malware assessment application 44 may identify and/or retrieve any corresponding columnar/row entries. The electronic database 80 thus represents a rich repository of historical malware assessments that may be quickly and easily applied to current/recent malware reports 28.

The electronic database 80 of malware events may also reveal the malware resolution suggestion 70. When any malware event 28 is detected and reported, the malware assessment application 44 may also identify and retrieve the corresponding malware resolution suggestion 70. Because the malware event 28 has characteristics or electronic content that satisfies the malware resolution rule(s) 48, the malware assessment application 44 determines that the malware event 28 corresponds to at least one historical malware assessment. The malware event 28, in other words, may have already been observed, assessed, and logged within the electronic database 80 of malware events. The malware assessment application 44 may thus identify and retrieve the historical entries that correspond to the historical malware event 28 previously logged at an earlier date/time stamp 84. Because the historical malware event 28 was previously assessed (such as by the rules 48, by machine learning, and/or by the human expert review 52), the malware assessment application 44 may identify and retrieve the corresponding malware resolution suggestion 70. The malware resolution suggestion 70 preferably explains the process or analysis used by the human expert analyst 86 to arrive at the final malware determination 72. As an example, the malware resolution suggestion 70 may indicate that a detection looks like a USB infection that has been historically logged. As another example, the malware resolution suggestion(s) 70 may indicate that an incident of cpmpromise (or IOC) has been marked False Positive > 80% of the time in the last week. By retrieving the malware resolution suggestion 70, the malware assessment application 44 may provide that same historically-approved/used process or analysis to other human expert analysts. Institutional, expert knowledge may thus be retained and disseminated to any personnel scrutinizing the malware events 28. The malware resolution suggestion 70 provides historical guidance for the final malware determination 72.

The malware resolution suggestion 70 efficiently retains workplace knowledge. Teams of the human expert analysts 86 may be used to inspect any of the malware events 28 reported by the client devices 30. Even though the malware assessment application 44 may flag or alert of the malware event 28 satisfying the malware resolution rule(s) 48, the malware assessment application 44 may still be configured or programmed to queue the malware event 28 for the human analyst review 52. These human expert analysts 86 may manage customers' environments, and the human expert analysts 86 may respond to detections going off within a particular customer's endpoint client devices 30. The human expert analysts 86 may scrutinize, triage, and remediate the customer's malware events 28. By logging and retrieving historical malware assessments (such as the final malware determinations 72 previously assessed by other expert analysts), the malware resolution suggestion 70 improves analyst efficiency. Moreover, the malware resolution suggestion 70 also improves technical efficiency, for instance, by automatically implementing the malware resolution suggestion 70 or as a result of the analyst being able to more competently spot and react to malware 34. As malware threats grow in number and in complexity, the sheer volume of the malware events 28 is foreseen to overwhelm the pool of human expert analysts 86. By implementing the malware resolution rules 48, the electronic database 80 of malware events, and the malware resolution suggestion 70, the malware assessment service 40 efficiently increases the number of human analyst review 52 that are performed per analyst per day. The suggestion-based malware assessment service 40, at a minimum, recommends the historical malware analysis as an analysis starting point for the final malware determination 72.

The malware resolution suggestion 70 may be targeted to individuals or team. Because the electronic database 80 retains historical malware assessments, the malware assessment application 44 may quickly and easily identify individual experts, or teams/groups of experts, having historical experience with particular malware events 28. When a particular human expert analyst is associated with multiple historical malware events 28 having the same/similar identifiers or codes (such as indicator of compromise, customer identifier, or malware identifier), then the malware resolution rule(s) 48 may specify that any new malware event 28 having the same/similar identifiers or codes be routed to, and/or assigned to, the same human expert analyst. Groups or teams of analysts may similarly have historical experience and subject matter expertise. The malware resolution rule(s) 48 may thus be created to favor this historical expertise, all without any code changes.

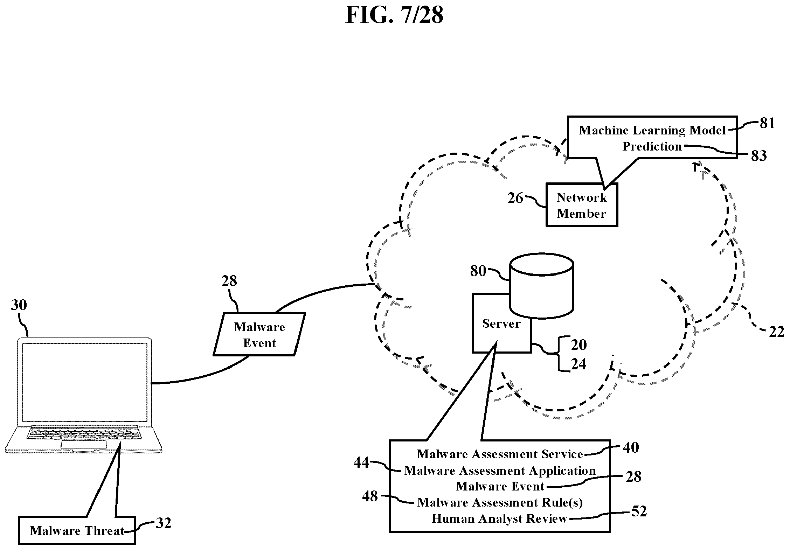

FIG. 7 illustrates examples using machine learning. Even though the malware assessment service 40 quickly implements the malware assessment rules 48, the malware resolution suggestion 70 may also reflect a machine learning model 81. As the cloud-computing environment 22 receives and processes the malware events 28, the malware events 28 may also be analyzed by the machine learning model 81. The machine learning model 81 may be a cloud service provided by any of the network members 26 affiliated with the cloud-computing environment 22. The machine learning model 81 may additionally or alternatively be executed by the server 24. However the machine learning model 81 is architected, the machine learning model 81 may be trained to analyze the malware events 28 and to generate the malware resolution suggestion 70 as a prediction 83. That is, the machine learning model 81 may interface with the electronic database 80 and retrieve its database entries reflecting historical malware assessments. The machine learning model 81 may train itself, or be trained, using the historical malware assessments as inputs. The machine learning model 81 may then analyze a current malware event 28 and generate the malware resolution suggestion 70 that predicts the final malware determination 72 that would or will be applied by the human analyst review 52. The machine learning model 81 may again reflect the historical knowledge accumulated over months/years of human analyst reviews 52.

Historical retention may be configurable. Because the malware assessment service 40 may analyze thousands of malware events 28 every week, the electronic database 80 of malware events quickly grows in byte size and in entry size. However, by logging the date/time stamp 84 associated with each malware event 28, the malware assessment application 44 may cull the database 80 according to the date/time stamp 84. The malware assessment application 44 may retain the database entries lying within a recent time range, but older entries may be removed and offloaded to remote storage. The malware assessment rules 48, for example, may define or specify a query window for expanding or contracting database correlations based on the date/time stamp 84. The malware assessment rules 48 may specify the time range for retention and also separately specify the time range for the query window. The malware assessment rules 48 may thus be easily changed in seconds to extend/reduce any time frame, in real time, without having to retrain the machine learning model 81. Simply put, the malware assessment rules 48 may be tweaked within seconds.

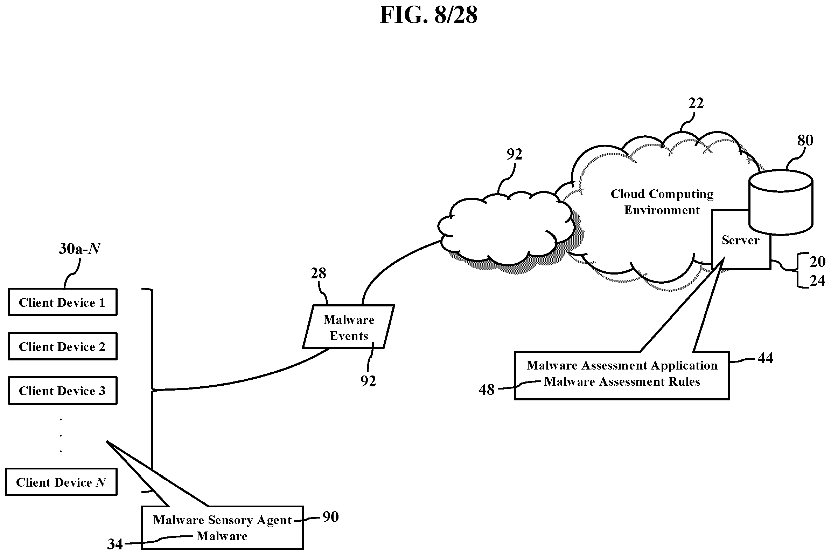

FIGs. 8-9 illustrate more detailed examples of the malware events 28. While the malware assessment application 44 may monitor any desired data, in these examples the malware assessment application 44 monitors the malware events 28 reported by the client devices 30. Again, for simplicity, FIG. 8 only illustrates several client devices 30a*N.* In actual practice, though, there may be thousands, or even millions, of the client devices 30 operating throughout the world. Each client device 30 downloads, stores, and executes a malware sensory agent 90. The malware sensory agent 90 is a security agent that is installed on the corresponding client device 30. The malware sensory agent 90 thus includes computer program, code, or instructions that scan and monitor its corresponding client device 30 for events, communications, processes, activities, behaviors, data values, usernames/logins, locations, contexts, and/or patterns that indicate evidence of the malware 34. Should any malware sensory agent 90 detect evidence of the malware 34 at the corresponding client device 30, the malware sensory agent 90 instructs its client device 30 to generate and report the malware event 28 to the cloud-computing environment 22. The malware event 28 is routed via access/communications networks 92 to a network address (*e.g*., IP address) associated with the cloud-computing environment 22. The cloud-computing environment 22 may then route the malware event 28 to the network address (*e.g*., IP address) associated with the server 24 hosting the malware assessment application 44. The server 24 logs each malware event 28 in the electronic database 80 of malware events. The malware event 28 may include a detailed description of the client device 30 (*e.g*., make, model, software and hardware inventory) and the events, communications, activities, behaviors, data values, and/or patterns that triggered reporting. The server 24 executes the malware assessment application 44 to assess the malware event 28 according to the malware assessment rules 48 (as this disclosure explains).

As FIGs. 8-9 illustrate, the malware sensory agent 90 may thus monitor identity domains and sensory agent domains. The malware sensory agent 90 monitors endpoint processes conducted by the client device 30. The client device 30, in simple words, is performing/executing an unusual/suspicious process or attempting an unusual/suspicious event, communication, activity, behavior, command line, or data value. The malware sensory agent 90, however, may also monitor identity and contextual indicators, such as login attempts (usernames, passwords, dates/times), webpage domains/requests, locations, IP addresses, and usage of software applications. The malware sensory agent 90 may monitor and report any unusual or suspicious usage context for the malware assessment service 40. The malware event 28 may thus include a contextual detection 92 that describes any current, unusual, or suspicious identity or context. When the server 24 receives the malware event 28, the server 24 logs and stores the malware event 28 to the electronic database 80 of malware events. The malware assessment application 44, in particular, may instruct the server 24 to add database entries that log the contextual detection 92 in association with the corresponding columnar/row entries. The malware resolution rule(s) 48 may thus also have terms specifying the contextual detection 92 for further assessment. The contextual detection 92 may thus be additional historical, expert knowledge captured and reflected by the human analyst review 52, the final malware determination 72, and the malware resolution suggestion 70.

The malware resolution rules 48, and the malware resolution suggestion 70, may thus reflect historical observations. Because the electronic database 70 comprehensively logs the malware events 28, the malware assessment application 44 may quickly and easily access historical malware assessments conducted by prior human expert analysts. An example of the malware resolution rules 48, then, may specify that if a particular analyst has worked > "n" detections on a particular host in the last 2 hours, and a new detection is seen on that same host, then the malware resolution rules 48 may specify that a notification be sent to the same analyst. The malware resolution suggestion 70 may also indicate that the same analyst pick up the latest detection and similarly assess, as the context 92 around that host. As another example of the malware resolution rules 48, suppose the malware assessment application 44 determines that the database 80 references a matching historical pattern for a potential USB trojan. The malware resolution rules 48 may attach the malware resolution suggestion 70 indicating information on the possible USB trojan, along with any killbooks or further documentation links to help remediate the detection.

Computer functioning is improved. The malware assessment application 44 may monitor both the identity domains and sensory agent domains. The malware assessment application 44 may thus correlate data points across disparate streams and across a period of time. The malware assessment application 44 may correlate identity based detections with related sensory agent based detections, and look for patterns that can be used to improve operation efficiency across the two domains. Indeed, the identity based detections may include any other type of non-process based detections, such as mobile-based detections and cloud environment-based detections. The identity based detections may also include detections from third party sources (such as extended Detection and Response or XDR). The malware assessment service 40 may ingest, parse, and/or correlate any data thing. The malware assessment application 44 thus more quickly and efficiently detects the malware 34.

The malware sensory agent 90 monitors the client device 30. The malware sensory agent 90 interfaces with an operating system executed by the client device 30. The malware sensory agent 90 is a software application or program code stored in a memory device of the client device 30 and executed by a hardware processor operating within the client device 30. The malware sensory agent 90 may thus have permissions to monitor any kernel-level activity and/or any user-mode activity conducted by the client device 30 (such as any smartphone, laptop, tablet, server, switch, or other computer). Should the malware sensory agent 90 detect any suspicious activity, the malware sensory agent 90 cooperates with the operating system to generate and send the malware event 28 to the cloud-computing environment 22.

Computer functioning is further improved. Each week the server 24 may receive thousands of malware events 28 reported by the millions of the malware sensory agents 90. The server 24 must very quickly assess each malware event 28 to prevent the malware 34 from damaging the client devices 30. The server 24 must further quickly assess each malware event 28 to stop the malware 34 from spreading and infecting other machines. However, because the server 24 executes the malware assessment application 44 providing the rules-based malware assessment service 40, the server 40 need only evaluate the malware assessment rules 48 and perform database lookups. The logical malware assessment rules 48 are quick and easy to execute (requiring reduced hardware resources and electrical power). The queries to the electronic database 80 of malware events are also quick and easy to execute (requiring reduced hardware resources and electrical power). The server 24 requires less time and resources to detect the malware 34.

The malware resolution rules 48 may also implement prioritization or scoring schemes. As thousands of the malware events 28 may be received every week, the malware assessment service 40 may generate and assign a priority or score. As a very simple example, the malware assessment application 44 may prioritize the human analyst review 52 based on the date/time stamp 84 associated with the malware event 28. The malware events 28, in other words, may be assigned according to age. New detections may get priority over older detections or *vice-versa.* The malware events 28 may also be prioritized or scored according to the human expert analysts 86. When a particular human expert analyst 86 has repeated historical entries for a particular customer, then a new malware event 28 having a same/similar context 92 (that is, associated with the same customer) may be high priority or scored for the same human expert analyst 86. Similarly, the malware events 28 having the same/similar indicator of compromise (IOC) or other data may be routed/assigned to individuals or teams having historical expertise. The malware resolution rules 48 may thus implement efficient prioritization or scoring schemes based on the historical malware assessments.

Polling schemes may be implemented. Because the malware assessment rules 48 may be quickly and easily modified or added, the malware assessment application 44 may periodically or randomly check for a new or modified rules package. The malware assessment application 44 may thus be configured with a polling parameter defining how often the malware assessment application 44 queries the cloud-computing environment 22 (or some other rules source). As a simple example, the malware assessment application 44 may submit queries every minute for a new or modified rules package. Again, a new or modified malware assessment rule 48 may be implemented within seconds to reflect any pattern or template. The server 24 detects new malware patterns within seconds while requiring less time and resources.

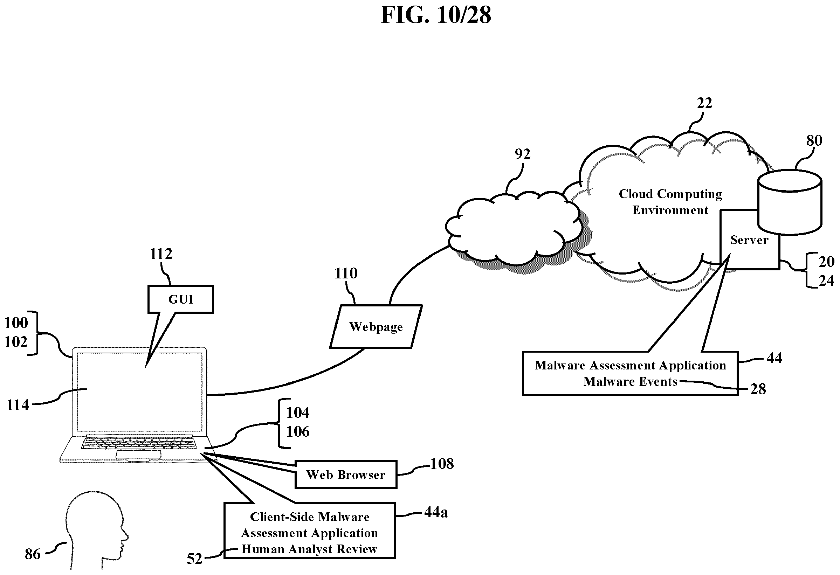

FIG. 10 illustrates examples of remote access. When a user (such as the human expert analyst 86) scrutinizes the malware event 28 and performs the human analyst review 52, the analyst's computer 100 may interface with the server 24. FIG. 10 illustrates the analyst's computer 100 as a remote laptop computer 102, but the analyst's computer 100 may be any smartphone, tablet, server, or other computer. The analyst's computer 100 has a network interface to an access network or other communications network 92, thus allowing the analyst's computer 100 to establish network communications with the cloud-computing environment 22 and/or with the server 24. The analyst's computer 100 may thus have access permissions to the cloud-computing environment 22 and/or to the server 24. The analyst's computer 100 has a hardware processor 104 that executes a client-side version 44a of the malware resolution application stored in a memory device 106. The malware assessment application 44 and the client-side version 44a may cooperate in a client-server relationship to facilitate the human analyst review 52 of the malware event 28.

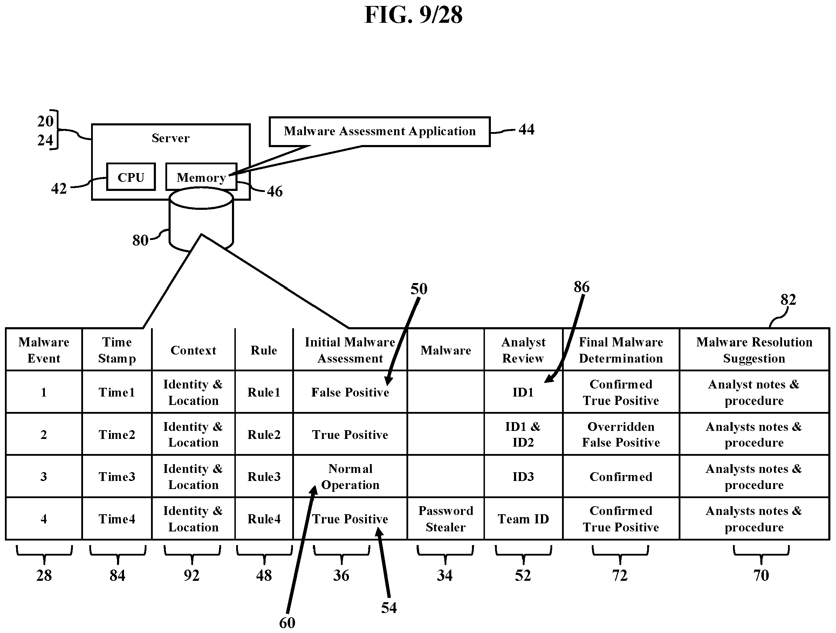

While any mechanism may be used, FIG. 10 illustrates examples using web pages. The analyst's computer 100 stores and executes a web browser 108 that interfaces with the client-side version 44a of the malware resolution application. When the user (*e.g*., the human expert analyst 86 illustrated in FIGs. 6 & 9) wishes to conduct the human analyst review 52, the user commands the client-side version 44a of the malware resolution application to establish communication with the server 24 and to access the electronic database 80 logging the malware events 28. The web browser 102 and the client-side version 44a, for example, may cooperate to request and to receive a webpage 110 having content representing at least some database entries retrieved from the electronic database 80. When the analyst's computer 100 receives the webpage 110, the analyst's computer 100 processes and displays the webpage 110 as a graphical user interface (GUI) 112 via a display device 114. The human expert analyst 86 may thus type or enter tactile commands via a keyboard/touchscreen that select a particular malware event 28 and that update, change, or add any corresponding database entries. The human expert analyst 86 may thus tactilely interface with the webpage/GUI 110/112 to inspect and to resolve the selected malware event 28 pre-screened by the malware assessment application 44.

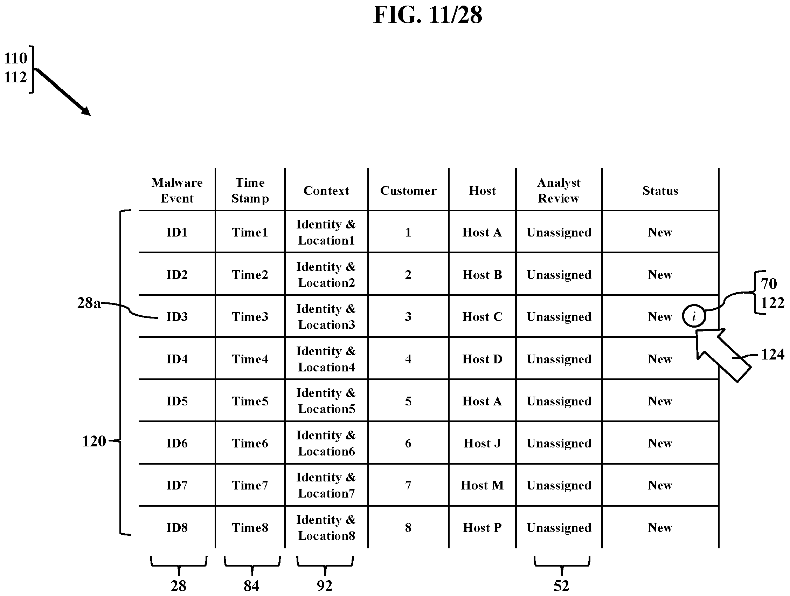

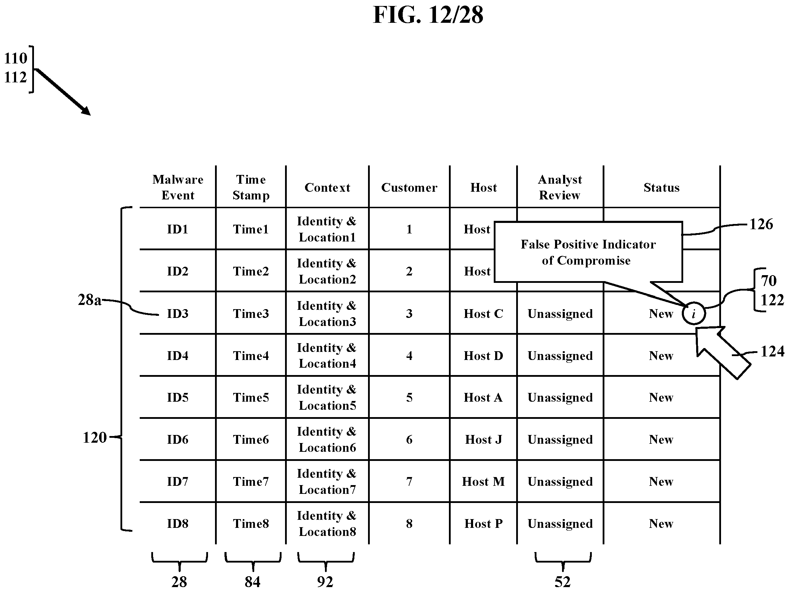

FIGs. 11-13 illustrate examples of the webpage/GUI 110/112. FIGs. 11-13, in particular, illustrate more database entries (within the electronic database 80) that may be associated with each malware event 28. FIG. 11, for example, illustrates a queue 120 of the malware events 28 that is displayed by the analyst's computer (illustrated as reference numeral 100 in FIG. 10). The malware events 28, in other words, are awaiting the human analyst review 52. The queue 120 lists recent or older malware events 28 and some of their corresponding details available from the electronic database 80 of malware events (illustrated in FIG. 10). Because the queued malware events 28 are unresolved and pending assignment, the user (such as the human expert analyst 86 illustrated in FIG. 10) may scan or peruse the queue 120 and tactilely select which malware event 28 is desired. The human expert analyst 86, for example, may wish to first investigate the malware event 28a having the corresponding malware resolution suggestion 70. After all, the malware resolution suggestion 70 indicates that the malware assessment application 44 (illustrated in FIG. 10) has determined a historical malware assessment exists and was documented during a previous human analyst review 52. FIG. 11, in particular, illustrates an iconic suggestion indicator 122 associated with the malware resolution suggestion 70. The iconic suggestion indicator 122 is a visual reference that indicates the malware resolution suggestion 70 exists for the corresponding malware event 28a. The iconic suggestion indicator 122, in other words, may alert a current expert analyst 86 that a prior expert analyst already reviewed a similar, historical malware event 28. Moreover, the iconic suggestion indicator 122 may be a malware graphical control, HTML widget or object, or link to the corresponding database entry in the electronic database 80. As FIG. 12 illustrates, when the human expert analyst 86 moves a graphical cursor 124 and mouses/hovers over the iconic suggestion indicator 122, the web browser 102 and the client-side version 44a cooperate to request and to receive a malware incident summary 126 retrieved from the electronic database 80. The malware incident summary 126 visually displays a short explanation representing the malware resolution suggestion 70.

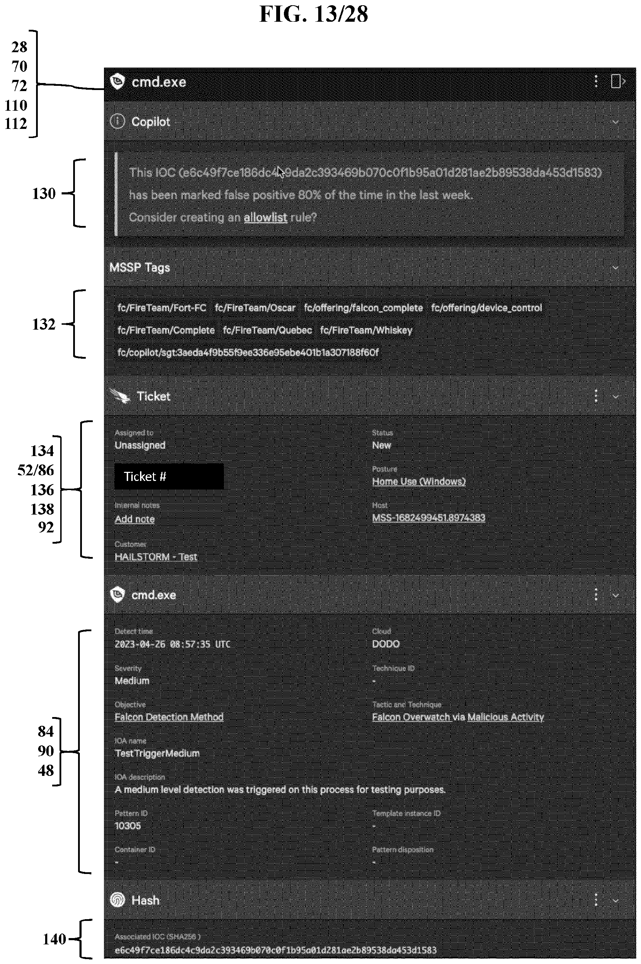

FIG. 13 illustrates a more detailed malware assessment. When the human expert analyst 86 desires a fuller historical assessment report, the human expert analyst 86 moves the graphical cursor 124 and clicks or otherwise selects the iconic suggestion indicator 122 (as explained with reference to FIGs. 10-12). The iconic suggestion indicator 122 may thus be a prompt to retrieve a more detailed explanation of the historical malware assessment logged as a result of the prior human analyst review 52. Because the iconic suggestion indicator 122 may be a graphical control, HTML widget or object, or link to the corresponding database entry in the electronic database 80, selecting the iconic suggestion indicator 122 causes the web browser 102 and the client-side version 44a to request and to receive the final malware determination 72. The final malware determination 72 displays a more detailed malware analysis historically applied by a previous expert analyst reviewing a similar historical malware event 28. The malware resolution suggestion 70 provides a historical malware background 130 of previous reports and malware assessments. The malware resolution suggestion 70 may also provide malware classification tags 132 applied by previous expert analysts, by the malware assessment rules 48 (illustrated by FIGs. 1-9), and/or by machine learning analysis (such as explained with reference to FIG. 7). The malware resolution suggestion 70 may also provide ticketing information 134 provided by any service ticket software system. That is, the malware assessment application 44 may interface with, and receive inputs from, the service ticket software system. The malware resolution suggestion 70 may thus reflect and display the ticketing information 134 provided by the service ticket software system (such as the currently-assigned human expert analyst 86, a hosting domain 136, a customer 138, and the context 92). The malware resolution suggestion 70 may also provide a detailed explanation of the malware sensory agent 90 reporting the malware event 28 and the triggering malware assessment rule(s) 48. The malware resolution suggestion 70 may also provide a hash value 140 associated with the malware event 28. The hash value 140 is generated by a hashing algorithm (such as SHA-256) that hashes particular information associated with the malware event 28. The hash value 140, for example, may be generated by hashing the indicator of compromise (or IOC) describing the malware event 28. The human expert analyst 86 may compare and scrutinize the malware event 28 to its historical counterpart. The human expert analyst 86 may thus quickly determine if the historical malware resolution suggestion 70 similarly applies to a queued malware event 28.

Indeed, new rules may be suggested. Suppose that the malware assessment application 44 receives the prediction 83 generated by the machine learning model 81 (as explained with reference to FIG. 7). However, by logging and inspecting the electronic database 80 of malware events, suppose also that the malware assessment application 44 determines that eighty percent (80%) of those predictions 83 are the false positive report 50 (illustrated in FIG. 5). That is, the machine learning model's malware detections (with a particular indicator of compromise or IOC) have been false alarms greater than 80% of the time in the past week. The machine learning model 81, in other words, is over reporting/detecting false alarms. When the malware assessment application 44 receives a new predicted detection having the same IOC, then the malware assessment application 44 may attach malware resolution suggestion 70 based on the historical observations. The historical malware background 130 thus explains that this detection is also likely the false positive report 50 (based on these similar detections). Furthermore, the malware assessment application 44 may provide resources to create an AllowList rule (*e.g.*, the malware resolution rule 48) to prevent future false positive reports 50 from being generated. The analyst is presented with this information as soon as they view the detection.

As FIG. 13 also illustrates, the malware resolution suggestion 70 may be implemented. Because the malware event 28 has been historically matched, the malware assessment application 44 (illustrated in FIG. 10) may implement the corresponding malware resolution suggestion 70. The malware resolution suggestion 70, as an example, may be a selectable feature within the webpage/GUI 110/112. The malware resolution suggestion 70 may thus be a graphical control, HTML widget or object, or link that is presented to the current expert analyst 86. When the human expert analyst 86 moves the graphical cursor 124 and tactilely selects the malware resolution suggestion 70, the web browser 102 and the client-side version 44a and the malware assessment application 44 to accept and implement malware resolution suggestion 70. As FIG. 13 illustrates, for example, the historical malware background 130 indicates that the machine learning model is over reporting/detecting a particular indicator of compromise (or IOC), so the malware resolution suggestion 70 suggests a new "allow" malware assessment rule 48. When the human expert analyst 86 tactilely selects the malware resolution suggestion 70 as an input, the malware assessment application 44 may automatically generate the new "allow" malware assessment rule 48 that codifies or specifies the historical malware background 130. With a quick and simple click, then, the human expert analyst 86 may approve and initiate auto-generation of the malware assessment rule 48 based on historical data.

The malware resolution suggestion 70 may also be machine-implemented. The database entries referenced by the electronic database 80 of malware events provide a wealth of historical knowledge. The malware assessment application 44 may thus retrieve and analyze the database entries and generate statistical measures. The malware assessment application 44 may then use the statistical measures to automatically implement the malware resolution suggestion 70. Again, as FIG. 13 illustrates, the historical malware background 130 indicates that over eighty percent (80%) of the IOC reports are false positives. The malware assessment application 44 may thus compare this historical/statistical value to a threshold value. If the historical/statistical observance equals or exceeds the threshold value, then the malware assessment application 44 may have preconfigured autonomy to automatically generate the corresponding ("allow") malware assessment rule 48. If, however, the historical/statistical observance is less than the threshold value, then the malware assessment application 44 may decline autonomous rule generation. The malware assessment application 44, instead, may be preconfigured to await an input from the human expert analyst 86 (such as the tactile input above explained).

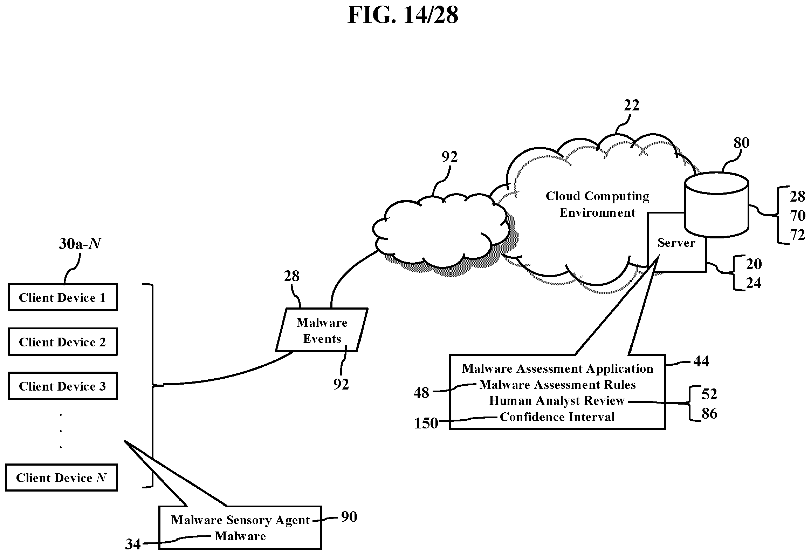

FIG. 14 illustrates examples of auto-generation of the malware assessment rules 48. As the cloud-computing environment 22 receives and assesses the many malware events 28 reported by the many client devices 30, the electronic database 80 of malware events provides a rich and detailed repository of historical malware knowledge. The electronic database 80, in particular, reflects the historical expertise and institutional knowledge of hundreds of human expert analysts 86 (conducting thousands of the human analyst reviews 52). The electronic database 80 stores and logs each malware event 28 and its corresponding final malware determination 72, as assessed by the human expert analyst 86. The electronic database 80 thus represents a workforce collection of expert historical malware assessments that may be harvested for quick results. FIG. 14 illustrates auto-generation of the malware assessment rules 48. As the cloud-computing environment 22 receives and assesses the many malware events 28, the malware assessment application 44 may auto-create a new malware assessment rule 48 based on historical observation. For example, as the server 24 compares the malware event 28 to the database entries representing the electronic database 80 of malware events, the malware assessment application 44 may log and count repeated entries having similar circumstances (such as matching bit patterns, hash values, command lines, etc.). Moreover, the malware assessment application 44 may log and count repeated human analyst reviews 52 documenting the same or similar malware resolution suggestion 70 and/or final malware determination 72. The malware assessment application 44 may further determine and compare the similar database entries to statistical confidence intervals 150 (or other measurement parameters). If the historical database observations satisfy the statistical confidence intervals 150, then the malware assessment application 44 may be configured to auto-generate the new malware assessment rule 48 based on the historical database observations. The malware assessment application 44, in other words, may autonomously create its own malware assessment rule 48 based on repeated historical observations. The malware assessment application 44 may thus proactively adapt the malware assessment rules 48 based on historical malware assessments. The malware assessment application 44 may construct the new malware assessment rule 48 using computer programming or code representing the malware resolution suggestion 70 and/or final malware determination 72. The malware assessment application 44 may then instruct the server 24 to automatically execute the computer programming or code representing the malware resolution suggestion 70 and/or final malware determination 72. The malware assessment application 44 may thus fully automate malware analysis, perhaps rendering another human analyst review 52 redundant and unnecessary. The malware assessment application 44 may thus be empowered or authorized to generate the final malware determination 72 (such as the true positive report 54 or the false positive report 50), based on historical observations logged by the client collections database 80.

Service tickets provide more examples of auto-generation. The malware assessment application 44 may monitor service ticket activities (as explained with reference to FIG. 13). Because the malware assessment application 44 may interface with, and receive inputs from, the service ticket software system, the malware assessment application 44 may listen for ticket activity and determine when a new service ticket is generated (such as by the date/time 84 and/or by ticket ID). Furthermore, the malware assessment application 44 may retrieve any information associated with a ticket and then auto-generate a corresponding malware assessment rule 48. Suppose, for example, that the malware assessment application 44 is notified (by the service ticket software system) that a new service ticket has been issued. The malware assessment application 44 requests, retrieves, and reads the ticket information. The malware assessment application 44 may then create a new (or modify an existing) malware assessment rule 48 based on the ticket information. The malware assessment application 44 may also then implement the new/modified malware assessment rule 48 for immediate malware detection. As a simple example, assume the ticket information identifies a customer activity specifying a time/date range (*e.g*., "red team training activity between 12:00 PM and 4:00 PM on the 10th of May"). The malware assessment application 44 may then construct the malware assessment rule 48 to ignore any detection dated the 10th of May between 12:00 PM and 4:00 PM and associated with the same red team customer.

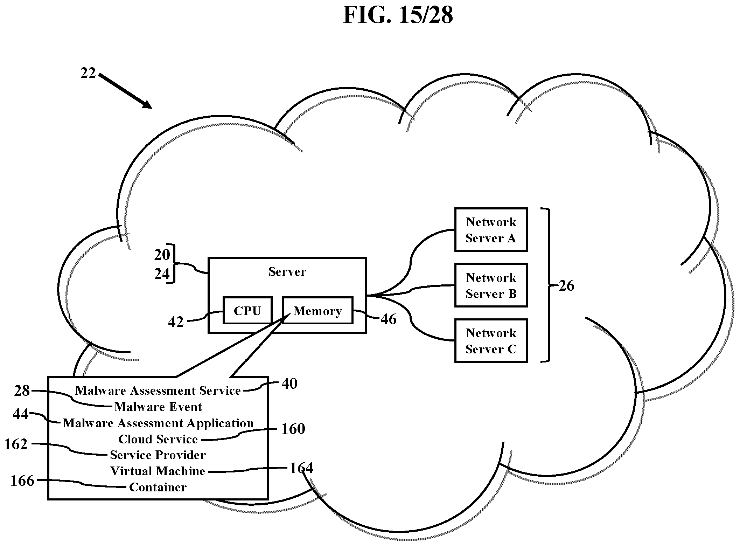

FIG. 15 illustrates examples of containerized malware assessment services. FIG. 15 again illustrates the server 24 communicating with the other servers, devices, computers, or other network members 26 operating within, or affiliated with, the cloud-computing environment 22 (*e.g*., public Internet, private network, and/or hybrid network). The server 24 is programmed to provide the malware assessment service 40 as one or more cloud services 160 associated with the cloud-computing environment 22. The malware assessment application 44 may thus instruct or cause the server 24 to provide the cloud service 160, perhaps on demand, on behalf of a service provider 162. The malware assessment application 44 may be executed by, or associated with, a virtual machine 164. The malware assessment application 44, in particular, may be packaged as an isolated container 166 that contains all of the necessary elements to provide the cloud service 160. The malware assessment application 44, for simplicity, is thus known as a containerized service 166 and 160. The cloud-computing environment 22 delivers hosted cloud-native services, like storage, servers, and application services (such as the malware assessment service 40), via the cloud-computing environment 22. Various implementations of the cloud-computing environment 22 are possible and could be used in the examples herein described. When the server 24 receives the malware event 28, the malware assessment application 44 instructs the server 24 to provide the malware containerized service 166 and 160 and assess the malware event 28, as this disclosure above explains.

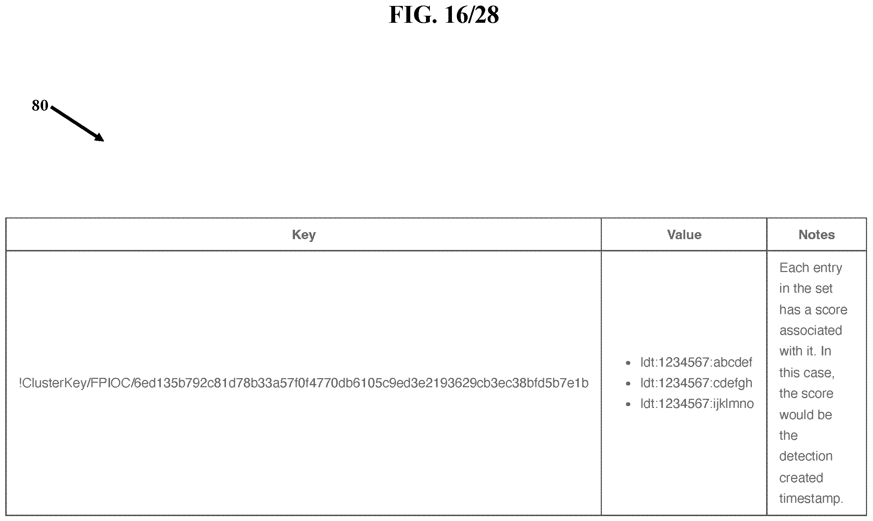

FIGs. 16-17 illustrate more detailed examples of the malware assessment service 40. The malware assessment application (illustrated as reference numeral 44 in previous FIGs.) may access or interface with software modules providing specialized functions. The malware assessment application 44, for example, may run as a KUBERNETES^{®} service. The electronic database 80 of malware events may be implemented as a REDIS^{®} instance. The malware assessment rules 48 may be imported from an AMAZON SIMPLE STORAGE SERVICE^{®} (or "AMAZON S3^{®}") storage container bucket. An AMAZON SIMPLE QUEUE SERVICE^{®} (or "AMAZON SQS^{®}") is used for redriving, with one (1) queue per pipeline. The malware assessment application 44 reads off of the detection pipeline for the malware sensory agents 90 deployed on the client computers 30 (illustrated in previous FIGs.). The malware assessment application 44 generates and targets the malware resolution suggestion 70 for the particular human expert analyst(s) 86 (illustrated in previous FIGs.). The malware assessment application 44 then sends the malware resolution suggestion 70 to the IP address associated with the human expert analyst(s) 86. When the analyst's computer 100 receives the malware resolution suggestion 70, the analyst's computer 100 processes the malware resolution suggestion 70 for display (as explained with refence to FIG. 10). The malware resolution suggestion 70 may be a short-lived entity that is tied to the particular recipient(s). The malware assessment application 44 operates against a set of the malware assessment rules 48 in the AMAZON S3^{®} storage container bucket, which determines what types of activity constitutes the malware resolution suggestion 70 and is/are easily modified. The malware assessment application 44 will use these malware assessment rules 48 to extract features from the malware events 28 and to store them in the electronic database 80. Newly created detections can then be evaluated by the malware assessment application 44 to determine whether they exhibit any of the same properties as other clusters in the electronic database 80, making them a candidate for a suggestion. Other services can also directly create suggestions if necessary. As another example, the malware assessment application 44 may be implemented using Amazon's AWS^{®}.

The malware assessment application 44 may comprise three services. The malware assessment application 44 utilizes a first service that pulls the malware events 28 off of a detection pipeline using APACHE KAFKA^{®} topics. The malware assessment application 44 prefilters those malware events 28 down to the detections that are configured as relevant. The malware assessment application 44 hydrates those relevant detections with information necessary to apply the malware assessment rules 48. The malware assessment application 44 then applies the malware assessment rules 48 and writes/logs the triggered results to the electronic database 80. The malware assessment application 44, in particular, writes/logs the corresponding malware resolution suggestion 70 using the APACHE KAFKA^{®} topics. The malware assessment application 44 uses a second suggestions writer service that reads off of the APACHE KAFKA^{®} topics and saves these items in a short-lived REDIS^{®} instance. The malware assessment application 44 uses a third suggestions API that reads from the REDIS^{®} instance in order to serve the malware resolution suggestion 70 to the end user, as well as providing fallback and other interfacing as needed.

The malware assessment application 44 may receive any input pipeline. The malware assessment application 44, for example, may monitor identity domains and sensory agent domains (as explained with reference to FIGs. 8-9). The malware assessment application 44, however, may be configured to monitor any desired input data (such as specified by a customer or client). Whatever the input pipeline, the input pipeline may have stages. A prefilter, for example, may filter the incoming data according to various rules, perhaps governed by the pipeline itself. Some prefilters may remove any data that is not belonging/related to a particular customer or requirement. A hydrator/fetcher may enrich the input data (such as the malware event 28) with further data in preparation for processing (such as fetching an entire detection document). An engine or module applies the malware assessment rules 48 to the hydrated input data (*e.g.*, the malware event 28) to both extract features and to generate the malware resolution suggestion(s) 70 (perhaps using the database entries referenced by the electronic database 80). A producer writes the generated malware resolution suggestion(s) 70 to a topic for consumption by a writer. The malware events 28, for example, may cause the generation of the majority of the malware resolution suggestion(s) 70, as these suggestions may usually be more relevant to new alerts. This pipeline may filter the detection activity according to origin (such as detection activity from the human expert analysts 86). The malware assessment application 44 may use this pipeline to extract features from triaged detections (*e.g*., resolutions and/or assignments).

Whatever the input pipeline data, the malware assessment application 44 generates the malware resolution suggestion(s) 70. The malware assessment application 44 may generate the malware resolution suggestion(s) 70 as the input data is processed, and/or the malware assessment application 44 may generate the malware resolution suggestion(s) 70 by correlating data from multiple input pipelines by some parameter (such as time, customer, origin). As an example, the malware resolution suggestion(s) 70 may indicate that a detection looks like a particular USB infection by inspecting at the command line associated with the detection. As another example, the malware resolution suggestion(s) 70 may indicate that an IOC has been marked False Positive > 80% of the time in the last week, which required correlating across multiple detections to spot the pattern.

The malware assessment application 44 may correlate across inputs by extracting features. At their simplest, features consist of a collection of values keyed under a common string and ordered in some way. They are stored as a REDIS^{®} value, usually as a SortedSet. The malware assessment application 44 may extract 0-*N* features per processed input and store them in a FeatureStore (such as the electronic database 80 of malware events). The malware assessment rules 48 may then specify and cause queries to spot patterns and to generate the malware resolution suggestion(s) 70.

As this disclosure above explained, the malware assessment rules 48 may define their own data retention policy or timeframe for any extracted feature. This scheme allows for noisy keys to not overwhelm the malware assessment service 40 and also allows for fine-tuning of the query windows. The REDIS^{®} keys themselves may have an expiry associated with them which gets updated whenever the set is updated. This expiry will automatically age out old keys (and the entire cluster associated with them). Within a cluster, because the timestamps 84 are associated with the detections (the malware events 28), specific entries efficiently age out in the sorted set. This is performed on set update with the ZREMRANGEBYSCORE command. Importantly, this allows for the query window during correlation to be expanded/reduced without having to rebuild the current model assuming that the retention period is sufficient to cover the requested window. This allows for faster iteration when tweaking the correlation rules.

FIGs. 16-17 illustrate more database entries referenced by the electronic database 80 of malware events. Suppose that the malware assessment application 44 generates the malware resolution suggestion(s) 70 every time a detection that exhibits an IOC that has been resolved as False Positive 80%+ in the last week. In order to track the number of times a particular detection is observed with a particular IOC, suppose the malware event 28 includes an IOC data field (represented by a SHA-256 hash value). The malware assessment application 44 may extract the IOC from the detection using

```
  "behaviors": [
 {
  ...
  "triggering_process_graph_id": "pid:859b961148ba4bcd9f92cf4b4a86f339:132966535390012381",
  "sha256": "6ed135b792c81d78b33a57f0f4770db6105c9ed3e2193629cb3ec38bfd5b7e1b",
  "md5": "1911a3356fa3f77ccc825ccbac038c2a",
  ...
```

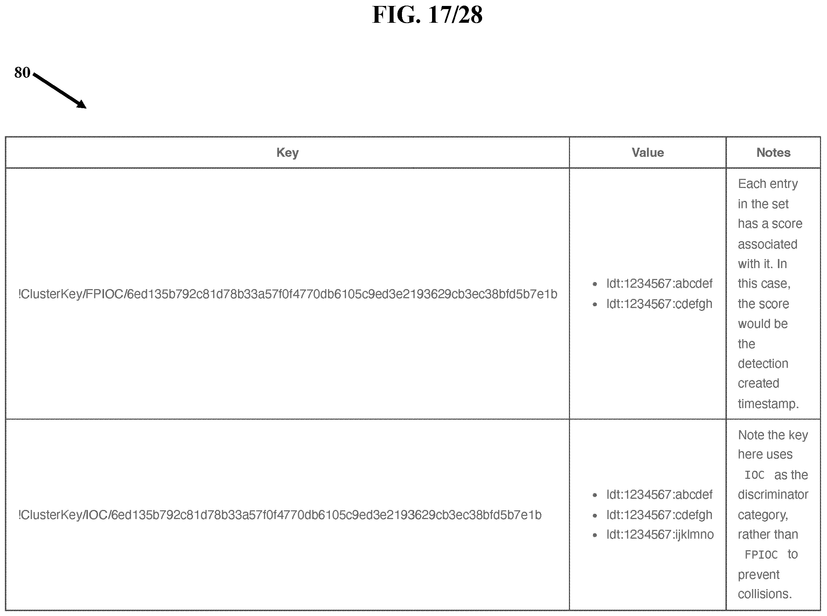

Once extracted, the IOC may then be added or referenced as entry of the electronic database 80. The malware assessment application 44 may track a feature that consists of all detections marked as the false positive report 50 with this IOC, by keying the feature using the IOC. FIG. 16 thus illustrates such a feature in the electronic database 80 (*e.g*., a REDIS^{®} instance). FIG. 17 illustrates entries in the electronic database 80 for tracking the percentage of false positive report 50 by tracking total occurrences of the IOC.

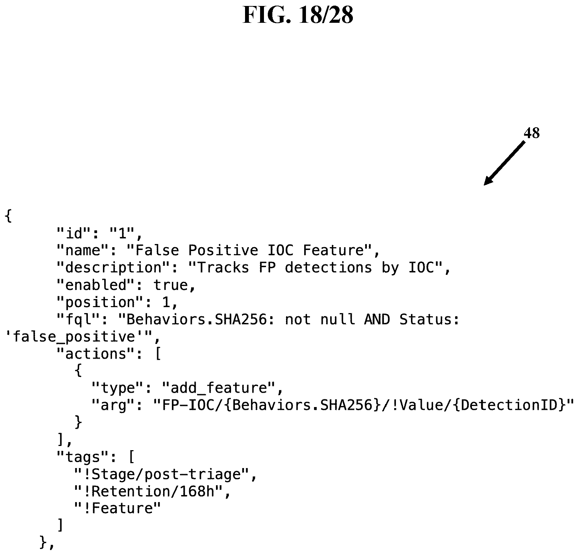

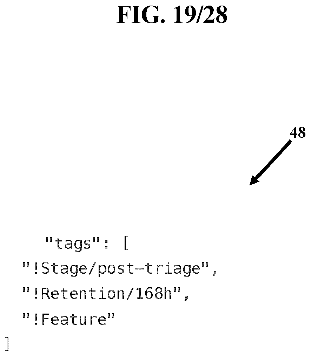

FIGs. 18-19 illustrate examples of the malware assessment rules 48. The malware assessment rules 48 may be logical statements. The malware assessment rules 48 may be components of modules or engine(s) that cause the malware assessment application 44 to extract features from the input pipeline(s), correlate the extracted features, and generate the malware resolution suggestion(s) 70. The malware assessment rules 48 may have any structure and be implemented using any language or programming. In general, each malware assessment rule 48 defines a set of actions that will be produced if a set of conditions are met. The malware assessment rule(s) 48 is/are compiled and/or executed. The malware assessment rule(s) 48 may be used to generate tags that are then interpreted to perform functions (such as adding a feature or generating the malware resolution suggestion 70). FIG. 18 illustrates the malware assessment rules 48 for extracting detections marked as the false positive report 50 with the IOC (as explained with reference to FIGs. 16-17). FIG. 19 further illustrates the malware assessment rules 48 specifying a tags data field. The malware assessment application 44 applies the malware assessment rules 48 to any input data (such as the malware event 28) based on what the rule 48 declares it is applicable to. For example, the malware assessment rules 48 might be applicable only to new detections rather than detections that have already been triaged. The malware assessment rules 48 declare various properties through the tags field. As FIG. 19 illustrates, the malware assessment rule 48 specifies that it is only applicable to resolved detections ("! Stage/post-triage") and is used for extracting features ("!Feature") rather than generating the malware resolution suggestion 70 (*e.g.*, "! Suggestion"). Any features generated should have a time-to-live (or TTL) of 1 week ("!Retention/4h"). This retention of life is accomplished by a combination of a REDIS^{®} TTL on the feature key and a ZREMRANGEBYSCORE operation on any new values added to an existing feature. Note, the highest unit that can be specified is hours. The condition that must be met in this case is
"fql": "Behaviors.SHA256: not null AND Status: 'false_positive'",
which specifies or searches for both a non-nil IOC and a resolution status of False Positive. If a detection is processed that meets that condition, then the malware assessment application 44 may generate tags specified by the rule actions, as below illustrated:

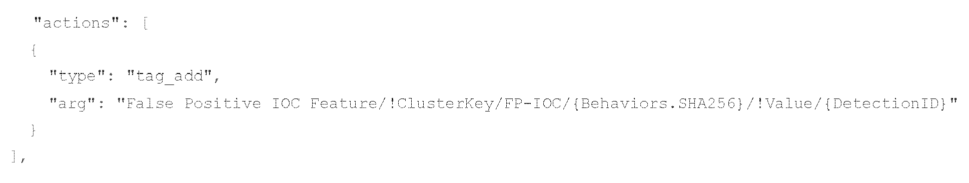

In more examples, the malware assessment rules 48 may also generate arbitrary actions. That is, the malware assessment rules 48 may still generate tags, but the action may be simplified as
"type": "add feature",
"arg": "FP-IOC/{Behaviors.SHA256}/!Value/{DetectionID}"

The malware assessment application 44 may thus define additional actions. Once any action is specified (such as parsed/processed), the malware assessment rules 48 are written/generated that use these arbitrary actions. Still, each tag produced by the malware assessment rule 48 may be prefixed with a rule name or other identifier. This prefix allows generating duplicate tags across rules and may be stripped before further processing. The rules engine (*e.g*., the malware assessment application 44) may template the tag using the detection (*i.e*., the malware event 28), resulting in a tag that looks like the below after stripping the prefix:

```
!ClusterKey/FP-IOC/6ed135b792c81d78b33a57f0f4770db6105c9
ed3e2193629cb3ec38bf5b7e1b/!Value/ldt:1234567:abcdef
```

This tag may then be interpreted as extracting a feature under the key 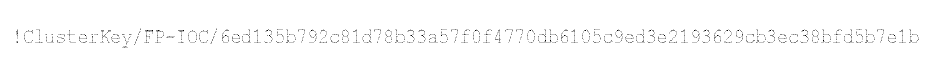 with a value of ldt:1234567:abcdef.

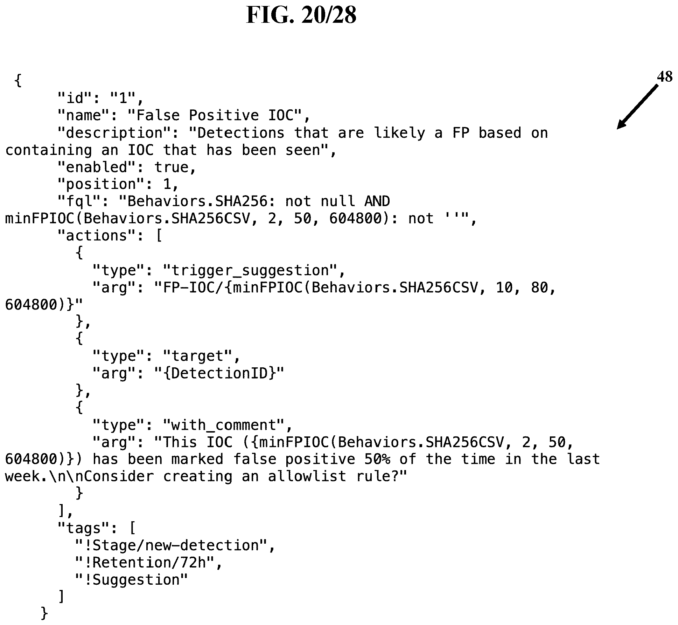

FIGs. 20-21 illustrate yet more examples of the malware assessment rules 48. The rules engine (*e.g*., the malware assessment application 44) use the previously extracted feature and executes the malware assessment rule 48 to generate the malware resolution suggestion 70. This malware assessment rule 48 targets new detections (*e.g*., "! Stage/new-detection") and is used to generate the malware resolution suggestion 70 ("! Suggestion"). This malware assessment rule 48 also specifies that any suggestions that are generated have a TTL of 72 hours ("Retention/72h"). This malware assessment rule 48 fires on the following condition

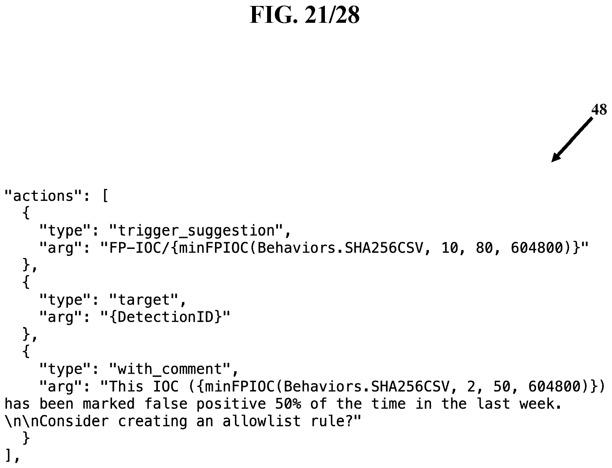

```
 "fql": "Behaviors.SHA256: not null AND minFPIOC(Behaviors.SHA256CSV, 2, 80, 604800): not ''",
```

which is again looking for a non-null IOC, but also a non-empty value returned from the "minFPIOC(Behaviors.SHA256CSV, 2, 80, 604800)" function. The function effectively queries the feature store (*e.g*., the electronic database 80 of malware events) to determine if the IOC meets the thresholds specified. Custom functions are not typically required for querying the electronic database 80, as it is generally possible to query the feature store using a generic REDIS^{®} time-window function. As FIG. 21 illustrates, tags produced by this rule 48 may also be specific to rules defining suggestion. After templating and prefix stripping, the tags resemble

```
    [
  "!Suggestion/FP-IOC/6ed135b792c81d78b33a57f0f
4770db6105c9ed3e2193629cb3ec8bfd5b7e1b",
  "!To/ldt:1234567:abcdef",
  "!Comment/This IOC (6ed135b792c81d78b33a57f0f4770db6105c9ed
3e2193629cb3ec38bfd5b7e1b) has been marked false positive 80% of the time in th
 ]
```

These tags are interpreted by the malware assessment application 44 to generate the malware resolution suggestion 70 with the below characteristics and/or parameters:
A category of FP-IOC/6ed135b792c81d78b33a57f0f4770db6105c9ed3e2193629cb3ec38bfd5b7e1b.

Targeted at Idt:1234567:abcdef (i.e., the specific detection, this could also be a specific analyst or a team, such as a list of email addresses or other identifiers).

With the comment specified, comments support Markdown to allow for formatting and links.

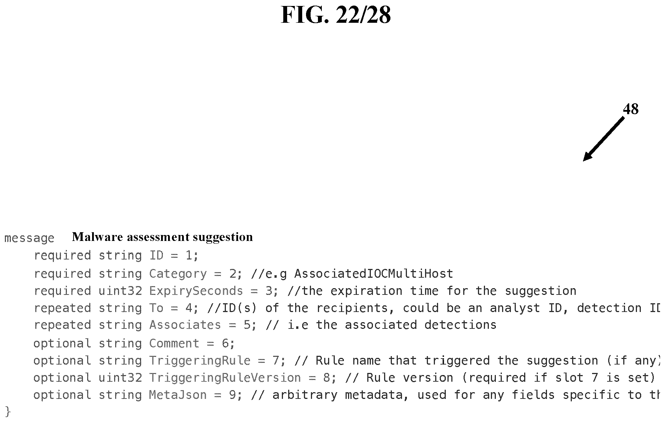

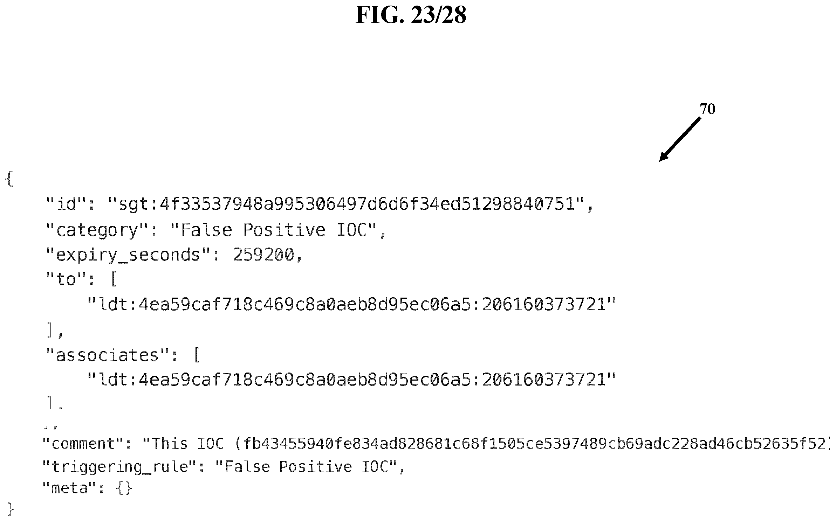

FIGs. 22-24 illustrate more examples of the malware resolution suggestions 70. FIG. 22 illustrates protocol examples of the malware assessment rules 48 for generating the malware resolution suggestion 70. FIG. 23 illustrates the resulting malware resolution suggestion 70. The malware resolution suggestions 70 may be created/generated by the malware assessment application 44 as a result of spotting a pattern deemed to be significant, important, or any other criterion. For example, some of the malware assessment rules 48 may specify particular patterns of interest. Each pattern describes calls, messages, events, activities, and other hardware/software behaviors that indicate, or forecast, suspicious attacks or safe operation. For example, the cloud computing environment 22 (illustrated in FIG. 1) may safely "detonate" the malware 34 and observe its behaviors. The cloud computing environment 22, in other words, executes the malware 34 in a safe "sandbox" and records the hardware/software behaviors. The malware assessment rules 48 may then be generated to reflect the hardware/software behaviors. The malware assessment rules 48 codify the calls, messages, events, activities, and other hardware/software behaviorial patterns that precede, occur during, and occur after the malware 34. The malware resolution suggestions 70 may thus be based on historical detonation and observance of the malware 34. Indeed, as the expert analysts 86 triage detections (such as the malware events 28), the malware assessment application 44 may execute these rules 48 to extract features from the detections and store them in the electronic database 80 of malware events. Newly created detections can then be evaluated to determine whether they exhibit any of the same properties as other clusters in the electronic database 80. If they do, and the cluster is deemed to be significant (*i.e*., the size of the cluster is greater than a configured threshold), then that detection may be a candidate for providing the malware resolution suggestion 70. The malware assessment application 44 may execute the rules 48 to create the malware resolution suggestion 70 that can be targeted to at least one of the following levels: a particular expert analyst 86, a team or group of expert analysts 86, and/or the detection itself (*e.g*., ldt:abcdef: 1234567). Moreover, the malware resolution suggestions 70 may additionally or alternatively be created/generated by another cloud service 160 (as explained with reference to FIG. 15). This allows for integrations with other services that want to surface the malware resolution suggestions 70.

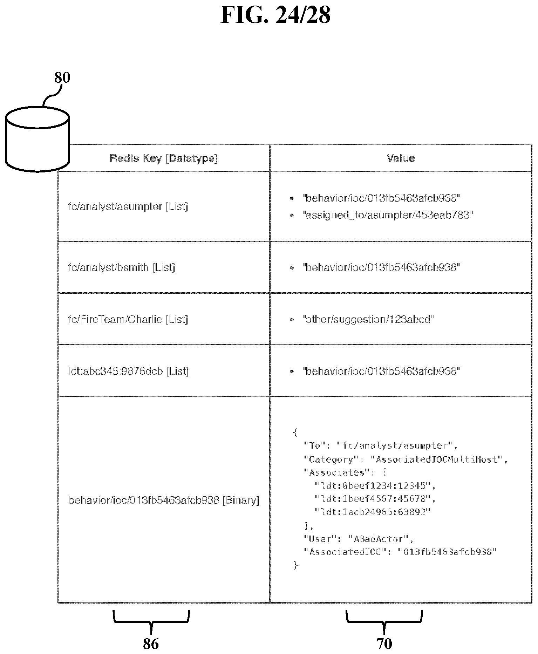

FIG. 24 illustrates still more database entries associated with the electronic database 80 of malware events. Here the database entries may associate different recipients to different malware resolution suggestions 70. The electronic database 80 (such as a REDIS^{®} cluster) may thus be a store of different malware resolution suggestions 70. While each malware resolution suggestion 70 may have any specified life, the database entries may hold relatively short-lived lists of different malware resolution suggestions 70 mapped against different or particular recipient(s) (*e.g*., identifiers of the expert analysts 86) and their corresponding network/email address. The malware resolution suggestions 70 may thus be valid for a certain amount of time (configurable in the rules 48), after which they may expire and no longer be visible to the expert analysts 86.

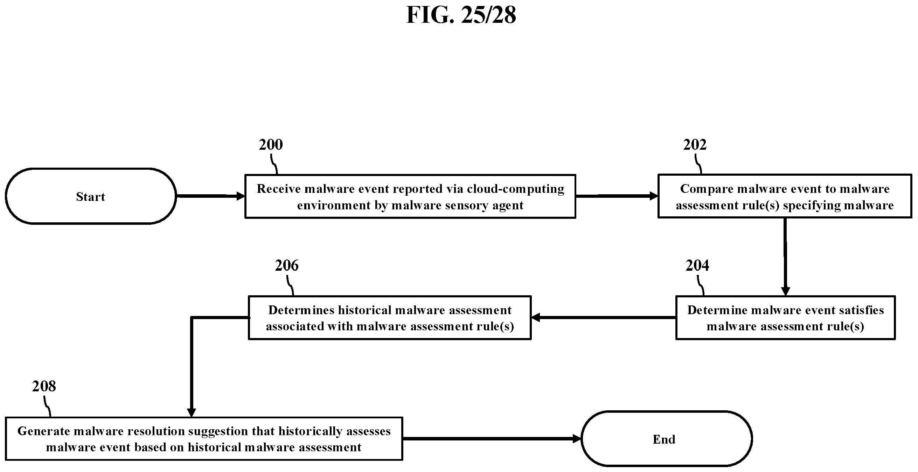

FIG. 25 illustrates examples of a method or operations executed by the computer 20 that assess and resolve the malware event 28. The computer 20 receives the malware event 28 reported via the cloud-computing environment 22 by the malware sensory agent 90 (Block 200). The computer 20 compares the malware event 28 to the malware assessment rule(s) 48 specifying the malware 34 (Block 202). The computer 20 determines that the malware event 28 satisfies the malware assessment rule(s) 48 specifying the malware 34 (Block 204). The computer 20 determines a historical malware assessment associated with the malware assessment rule(s) 48 (Block 206) and generates the malware resolution suggestion 70 that historically resolves the malware event 28 based on the historical malware assessment (Block 208). The computer 20 may then implement the malware resolution suggestion 70 in response to an input (Block 210) or in response to statistical analysis (Block 212) (as explained with reference to at least FIG. 13).

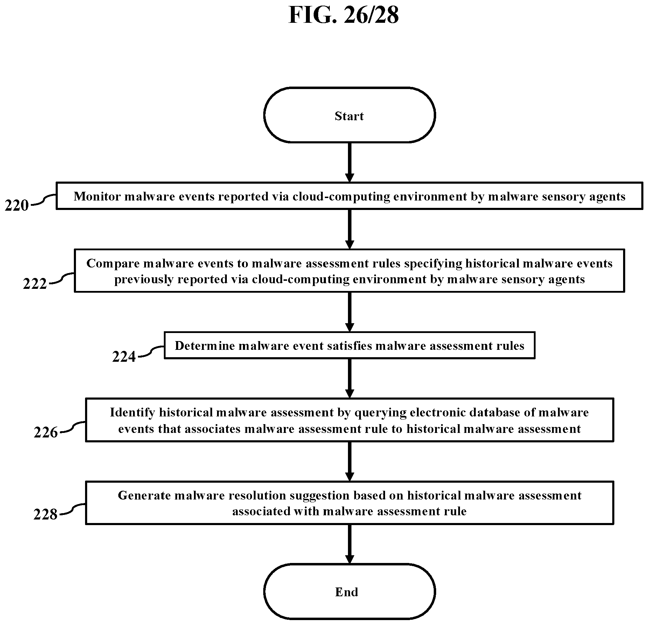

FIG. 26 illustrates more examples of a method or operations executed by the computer 20 that resolve the malware event 28. The computer 20 monitors the malware events 28 reported via the cloud-computing environment 22 by the malware sensory agents 90 (Block 220). The computer 20 compares the malware events 28 to the malware assessment rules 48 specifying historical malware events previously reported via the cloud-computing environment 22 by the malware sensory agents 90 (Block 222). The computer 20 determines that one or more of the malware events 28 satisfies/satisfy the malware assessment rules 48 (Block 224). The computer 20 identifies a historical malware assessment by querying the electronic database 80 of malware events having entries that associate the malware assessment rule 48 to the historical malware assessment (Block 226). The computer 20 generates the malware resolution suggestion 70 based on the historical malware assessment associated with the malware assessment rule 48 (Block 228). The computer 20 implements the malware resolution suggestion 70 (Block 230).

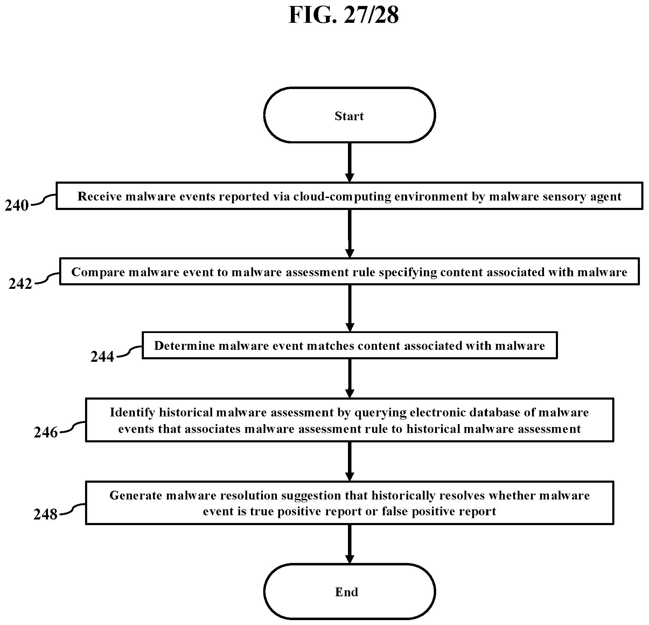

FIG. 27 illustrates still more examples of a method or operations executed by the computer 20 that assesses the malware event 28. The computer 20 receives malware event 28 reported via the cloud-computing environment 22 by the malware sensory agent 90 monitoring the endpoint client device 30 (Block 240). The computer 20 compares the malware event 28 to the malware assessment rule 48 specifying an electronic content associated with the malware 34 (Block 242). The computer 20 determines that the malware event 28 matches the electronic content associated with the malware 34 specified by the malware assessment rule 38 (Block 244). The computer 20 identifies a historical malware assessment by querying the electronic database 80 of malware events having entries that associate the malware assessment rule 48 to the historical malware assessment (Block 246). The computer 20 generates the malware resolution suggestion 70 that historically resolves whether the malware event 28 is the true positive report 54 or the false positive report 50 based on the historical malware assessment identified by the querying of the electronic database 80 (Block 248). The computer 20 implements the malware resolution suggestion 70 (Block 230).

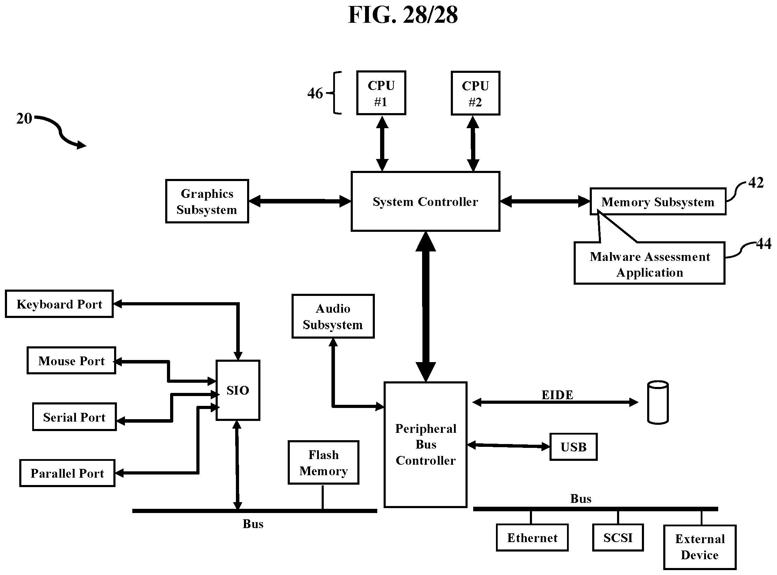

FIG. 28 illustrates a more detailed example of the operating environment. FIG. 28 is a more detailed block diagram illustrating the computer 20 (and thus the server 24 and the network member 26). The malware assessment application 44 is stored in the memory subsystem or device 42. One or more of the hardware processors 46 communicate with the memory subsystem or device 42 and execute the malware assessment application 44. Examples of the memory subsystem or device 42 may include Dual In-Line Memory Modules (DIMMs), Dynamic Random Access Memory (DRAM) DIMMs, Static Random Access Memory (SRAM) DIMMs, non-volatile DIMMs (NV-DIMMs), storage class memory devices, Read-Only Memory (ROM) devices, compact disks, solid-state, and any other read/write memory technology. Because the computer 24 is known to those of ordinary skill in the art, no detailed explanation is needed.

The computer 20 may have any embodiment. This disclosure mostly discusses the computer 20 as the server 24. The cloud-based malware assessment service 40, however, may be easily adapted to mobile computing, wherein the computer 20 may be a smartphone, a laptop computer, a tablet computer, or a smartwatch. The cloud-based malware assessment service 40 may also be easily adapted to other embodiments of smart devices, such as a television, an audio device, a remote control, and a recorder. The cloud-based malware assessment service 40 may also be easily adapted to still more smart appliances, such as washers, dryers, and refrigerators. Indeed, as cars, trucks, and other vehicles grow in electronic usage and in processing power, the cloud-based malware assessment service 40 may be easily incorporated into any vehicular controller.

The above examples of the cloud-based malware assessment service 40 may be applied regardless of the networking environment. The cloud-based malware assessment service 40 may be easily adapted to stationary or mobile devices having wide-area networking (*e.g*., 4G/LTE/5G cellular), wireless local area networking (WI-FI^{®}), near field, and/or BLUETOOTH^{®} capability. The cloud-based malware assessment service 40 may be applied to stationary or mobile devices utilizing any portion of the electromagnetic spectrum and any signaling standard (such as the IEEE 802 family of standards, GSM/CDMA/TDMA or any cellular standard, and/or the ISM band). The cloud-based malware assessment service 40, however, may be applied to any processor-controlled device operating in the radio-frequency domain and/or the Internet Protocol (IP) domain. The cloud-based malware assessment service 40 may be applied to any processor-controlled device utilizing a distributed computing network, such as the Internet (sometimes alternatively known as the "World Wide Web"), an intranet, a local-area network (LAN), and/or a wide-area network (WAN). The cloud-based malware assessment service 40 may be applied to any processor-controlled device utilizing power line technologies, in which signals are communicated via electrical wiring. Indeed, the many examples may be applied regardless of physical componentry, physical configuration, or communications standard(s).

The computer 20 and the network members 26 may utilize any processing component, configuration, or system. For example, the cloud-based malware assessment service 40 may be easily adapted to any desktop, mobile, or server central processing unit or chipset offered by INTEL^{®}, ADVANCED MICRO DEVICES^{®}, ARM^{®}, APPLE^{®}, TAIWAN SEMICONDUCTOR MANUFACTURING^{®}, QUALCOMM^{®}, or any other manufacturer. The computer 20 may even use multiple central processing units or chipsets, which could include distributed processors or parallel processors in a single machine or multiple machines. The central processing unit or chipset can be used in supporting a virtual processing environment. The central processing unit or chipset could include a state machine or logic controller. When any of the central processing units or chipsets execute instructions to perform "operations," this could include the central processing unit or chipset performing the operations directly and/or facilitating, directing, or cooperating with another device or component to perform the operations.

The cloud-based malware assessment service 40 may use packetized communications. When the computer 20, the server 24, or any network member 26 communicates via the cloud-computing environment 22, information may be collected, sent, and retrieved. The information may be formatted or generated as packets of data according to a packet protocol (such as the Internet Protocol). The packets of data contain bits or bytes of data describing the contents, or payload, of a message. A header of each packet of data may be read or inspected and contain routing information identifying an origination address and/or a destination address.

The cloud-computing environment 22 may utilize any signaling standard. The cloud-computing environment 22 may mostly use wired networks to interconnect the network members 26. However, the cloud-based malware assessment service 40 may utilize any communications device using the Global System for Mobile (GSM) communications signaling standard, the Time Division Multiple Access (TDMA) signaling standard, the Code Division Multiple Access (CDMA) signaling standard, the "dual-mode" GSM-ANSI Interoperability Team (GAIT) signaling standard, or any variant of the GSM/CDMA/TDMA signaling standard. The cloud-based malware assessment service 40 may also utilize other standards, such as the I.E.E.E. 802 family of standards, the Industrial, Scientific, and Medical band of the electromagnetic spectrum, BLUETOOTH^{®}, low-power or near-field, and any other standard or value.

The cloud-based malware assessment service 40 may be physically embodied on or in a computer-readable storage medium. This computer-readable medium, for example, may include CD-ROM, DVD, tape, cassette, floppy disk, optical disk, memory card, memory drive, USB memory stick, and large-capacity disks. This computer-readable medium, or media, could be distributed to end-subscribers, licensees, and assignees. A computer program product comprises processor-executable instructions for providing the cloud-based malware assessment service 40, as the above paragraphs explain.

The diagrams, schematics, illustrations, and the like represent conceptual views or processes illustrating examples of cloud services malware detection. The functions of the various elements shown in the figures may be provided through the use of dedicated hardware as well as hardware capable of executing instructions. The hardware, processes, methods, and/or operating systems described herein are for illustrative purposes and, thus, are not intended to be limited to any particular named manufacturer or service provider.

As used herein, the singular forms "a," "an," and "the" are intended to include the plural forms as well, unless expressly stated otherwise. It will be further understood that the terms "includes," "comprises," "including," and/or "comprising," when used in this Specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

It will also be understood that, although the terms first, second, and so on, may be used herein to describe various elements, these elements should not be limited by these terms. These terms are only used to distinguish one element from another. For example, a first computer or container could be termed a second computer or container and, similarly, a second device could be termed a first device without departing from the teachings of the disclosure.
In addition, the present teaching may be extended to the features of one or more of the following numbered clauses:
1. A computer that assesses a malware event, comprising:
   a central processing unit; and
   a memory device storing instructions that, when executed by the central processing unit, perform operations, the operations comprising:
      monitoring malware events reported via a cloud-computing environment by malware sensory agents;
      comparing the malware events to malware assessment rules specifying historical malware events previously reported via the cloud-computing environment by the malware sensory agents;
      determining that a malware event of the malware events satisfies a malware assessment rule of the malware assessment rules;
      identifying a historical malware assessment by querying an electronic database having entries that associate the malware assessment rule to the historical malware assessment; and
      generating a malware resolution suggestion based on the historical malware assessment associated with the malware assessment rule.
2. The computer of clause 1, wherein the operations further comprise identifying an entry of the entries in the electronic database that associates the historical malware assessment to a false positive report.
3. The computer of clause 2, wherein the operations further comprise generating a malware graphical control that prompts for the false positive report.
4. The computer of clause 1, wherein the operations further comprise identifying an entry of the entries in the electronic database that associates the historical malware assessment to a true positive report.
5. The computer of clause 4, wherein the operations further comprise generating a malware graphical control that when tactilely selected presents the true positive report.
6. The computer of clause 1, wherein the operations further comprise storing an entry of the entries in the electronic database that associates the malware event to the historical malware assessment.
7. The computer of clause 1, wherein the operations further comprise identifying an entry of the entries in the electronic database that associates an analyst identifier to the historical malware assessment.
8. The computer of clause 1, wherein the operations further comprise identifying an entry of the entries in the electronic database that associates an analyst group identifier to the historical malware assessment.

## Claims

1. A method executed by a computer that assesses a malware event, comprising:
comparing, by the computer, the malware event to a malware assessment rule associated with a malware;
determining, by the computer, that the malware event satisfies the malware assessment rule associated with the malware;
determining, by the computer, a historical malware assessment associated with the malware assessment rule; and
generating, by the computer, a malware resolution suggestion that historically assesses the malware event based on the historical malware assessment.

2. The method of claim 1, further comprising associating the malware assessment rule to a false positive report.

3. The method of claim 2, further comprising generating a webpage that provides the false positive report as the malware resolution suggestion.

4. The method of claim 1, further comprising associating the malware assessment rule to a true positive report.

5. The method of claim 4, further comprising generating a webpage that provides the true positive report as the malware resolution suggestion.

6. The method of any preceding claim, further comprising determining an analyst identifier that is associated with the malware assessment rule.

7. The method of any preceding claim, further comprising determining an analyst group identifier that is associated with the malware assessment rule.

8. The method of any preceding claim further comprising monitoring malware events reported via a cloud-computing environment by malware sensory agents.

9. The method of claim 8 wherein the comparing, by the computer, the malware event to a malware assessment rule associated with a malware comprises comparing the malware events to malware assessment rules specifying historical malware events previously reported via the cloud-computing environment by the malware sensory agents.

10. The method of any preceding claim, wherein generating, by the computer, a malware resolution suggestion that historically assesses the malware event based on the historical malware assessment comprises:
identifying a historical malware assessment by querying an electronic database having entries that associate the malware assessment rule to the historical malware assessment; and
generating the malware resolution suggestion based on the historical malware assessment associated with the malware assessment rule.

11. A computer program that, when executed by a central processing unit, perform operations that assess a malware, the operations comprising:
receiving a malware event reported via a cloud-computing environment by a malware sensory agent monitoring an endpoint client device;
comparing the malware event to a malware assessment rule specifying an electronic content associated with the malware;
determining that the malware event matches the electronic content associated with the malware specified by the malware assessment rule;
identifying a historical malware assessment by querying an electronic database having entries that associate the malware assessment rule to the historical malware assessment; and
generating a malware resolution suggestion that historically resolves whether the malware event is a true positive report or a false positive report based on the historical malware assessment identified by the querying of the electronic database.

12. The memory device of claim 11, wherein the operations further comprise storing an entry of the entries in the electronic database that associates the historical malware assessment to a network address.

13. The memory device of claim 12, wherein the operations further comprise sending the malware resolution suggestion to the network address.

14. The memory device of claim 13, wherein the operations further comprise generating a malware graphical control that when tactilely selected presents the malware resolution suggestion.

15. The memory device of any one of claims 11 to 14, wherein the operations further comprise expiring the malware resolution suggestion according to a time.
